# FASCICULE DE BREVET EUROPEEN

(11) **EP 0 604 297 B1**
(45) Date de publication et mention de la délivrance du brevet: **12.06.1996**
(21) Numéro de dépôt: 93403105.5
(22) Date de dépôt: 20.12.1993
(51) Int. Cl.: B64C 27/46, B64C 27/45, B29D 31/00

(54) **Pale en composite thermoplastique, notamment pour rotor arrière caréné d'hélicoptère, et son procédé de fabrication avec étape d'injection**
Faserverstärkes thermoplastisches Blatt, insbesondere eines eingelassenen Heckrotors und sein Herstellungsverfahren mit Spritzstufe
Composite thermoplastic blade, in particular for helicopter shrouded tail rotor, and its manufacturing procedure with injection stop

(30) Priorité: 23.12.1992 FR 9215608
(43) Date de publication de la demande: 29.06.1994
(73) Titulaire: EUROCOPTER FRANCE, F-13725 Marignane Cédex (FR)
(72) Inventeur: Aubry, Jacques Antoine, F-13480 Cabries (FR); Coffy, René Louis, F-13960 Sausset Les Pins (FR)
(74) Mandataire: Bérogin, Francis

(56) Documents cités:
- EP-A- 0 212 724
- EP-A- 0 296 014
- EP-A- 0 396 456
- FR-A- 1 443 155
- DESIGN ENGINEERING Juillet 1987 , LONDON GB pages 49 - 51 'NEW HEIGHTS FOR COMPOSITES'

## Description

L'invention concerne une pale dont les éléments essentiels sont en matériau composite à matrice en résine synthétique de rigidification, renforcée de fibres, minérales ou organiques, à haute résistance mécanique.

Dans une application avantageuse, une telle pale est destinée à l'équipement d'un rotor multi-pales à pas variable et à pales démontables individuellement, en particulier un rotor arrière, de préférence caréné, d'un hélicoptère.

L'invention concerne également un procédé de fabrication d'une telle pale.

Par les brevets français FR-2542695 et FR-2616409, on connait déjà de telles pales, du type comprenant :
- une coque rigide composite, à profil aérodynamique, allongée longitudinalement selon l'envergure de la pale, et dont une extrémité longitudinale, destinée à être tournée vers le moyeu du rotor, présente un pied de pale, ladite coque comportant au moins une couche de fibres de renfort agglomérées par une matrice en une résine synthétique de rigidification,
- au moins un longeron, dont au moins une partie est logée sensiblement longitudinalement dans la coque, et comportant au moins un faisceau composite allongé, de fibres de renfort continues et unidirectionnelles agglomérées par une matrice en une résine synthétique de rigidification, et
- au moins un corps de remplissage, disposé dans la coque entre cette dernière et au moins un longeron.

De plus, dans un exemple de pale décrit dans FR-2 616 409, chaque corps de remplissage est également un corps composite, à fibres de renfort agglomérées par une matrice en une résine synthétique de rigidification.

Pour être démontable individuellement et à pas variable, chaque pale des brevets précités comporte une partie d'emplanture, déformable en torsion autour d'un axe sensiblement parallèle à l'axe longitudinal de la pale, et par laquelle cette dernière est rattachée au moyeu du rotor. Cette partie d'emplanture comporte au moins un faisceau composite, allongé et torsible, qui prolonge longitudinalement, hors de la coque, au moins un faisceau composite d'au moins un longeron, en traversant le pied de pale, qui est tubulaire, l'extrémité du faisceau torsible de la partie d'emplanture qui est située du côté opposé à la coque étant conformée en boucle entourant une bobine fixée de manière amovible au moyeu par un boulon. En outre, le pied de pale tubulaire comporte un manchon, métallique ou composite, dont les extrémités axiales sont entourées chacune par l'une de deux collerettes coaxiales permettant l'encastrement et le montage en rotation du pied de pale dans deux ouvertures coaxiales ménagées dans deux parois du moyeu de rotor, le manchon présentant de plus, entre ces deux collerettes, un levier de commande de pas, en saillie radiale vers l'extérieur, et destiné à être articulé à un dispositif de commande collective du pas des pales. A l'intérieur du manchon, le pied de pale est constitué en partie par des prolongements des couches de fibres agglomérées de résine constituant la coque rigide de la pale, éventuellement par des prolongements de couches de fibres de renfort agglomérées par une résine synthétique, venant renforcer la coque dans sa partie voisine du pied de pale, et en partie d'éléments de remplissage et/ou de couches de tissu de fibres ou nappes de fibres agglomérées de résine synthétique pour renforcer le pied de pale.

Dans les deux brevets précités, tous les éléments composites, en particulier la coque, le ou les longerons, la partie d'emplanture, au moins partiellement le pied de pale tubulaire, et, éventuellement, le ou les corps de remplissage, sont réalisés dans des matériaux composites, à base de matrices organiques polymérisables, constituées de résines synthétiques thermodurcissables, par exemple des résines époxydes. Les fibres de renfort de ces matériaux composites sont, pour chaque pale, de différentes espèces, et en général de verre, de carbone, ou encore des fibres aramides, et, en outre, ces pales peuvent comporter certains éléments constitués en des matériaux synthétiques, mais non composites, tels que des mousses de polyuréthane.

Il en résulte des inconvénients. Sur une même pale, on peut devoir utiliser plusieurs résines thermodurcissables, adaptées chacune à des fibres de renfort particulières, ainsi, éventuellement, qu'à des éléments synthétiques non composites. Cependant, ces différentes résines thermodurcissables doivent être compatibles entre elles. Surtout, les matrices thermodurcissables, sous l'effet de la température et/ou du temps, subissent une transformation chimique appelée polymérisation. Cette réaction créé une modification du réseau moléculaire, qui devient tridimensionnel, infusible et irréversible. Au cours de ce cycle thermique, ces matrices thermodurcissables passent successivement par trois étapes : liquide, gel, solide. Les pièces à base de matrices thermodurcissables prennent leur forme définitive au cours de la montée en température, juste avant la gelification de la matrice. Par exemple, pour une matrice de la classe des polymérisations dites à 180°C, cet état est obtenu à environ 160°C. Au-delà, la matrice devient solide, et la pièce a pris sa forme définitive. Cet état est irréversible.

Ce caractère irréversible et infusible de l'état résultant d'une polymérisation est la cause de nombreuses difficultés d'industrialisation de ces pales : le taux de rebuts est important, car les procédés de fabrication, faisant intervenir une telle polymérisation, sont d'une mise en oeuvre délicate et parfois longue, et conduisent à l'obtention de pales qui ne présentent pas toujours les caractéristiques dimensionnelles requises. Du fait de l'irréversiblité de la polymérisation, les recyclages des rebuts sont impossibles, et les réparations, pour remise au standard, sont longues, coûteuses et délicates, lorsqu'elles sont possibles. La réaction chimique de polymérisation peut être à l'origine de dégagements gazeux toxiques, et le caractère réactif des produits impliqués pose des problèmes de péremption et de stockage de ces produits. Enfin, il est connu que les matériaux composites à matrices thermodurcissables présentent de médiocres tenues à la fatigue, aux chocs et impacts, en température, et une sensibilité au vieillissement humide.

Le problème à la base de l'invention est de remédier aux inconvénients précités des pales de l'état de la technique, et de proposer des pales substituables, d'une fiabilité améliorée et d'un coût de fabrication et de fonctionnement diminués.

Un autre but de l'invention est de proposer une pale dont la structure et la réalisation du pied de pale tubulaire sont extrêmement simplifiées par rapport aux exemples décrits dans le brevet FR-2 616 409.

A cet effet, l'invention propose une pale du type décrit dans le brevet FR-2 616 409 et présenté ci-dessus, et qui se caractérise en ce que la résine des matrices de la coque, de chaque corps de remplissage et de chaque faisceau de chaque longeron est une résine thermoplastique, et en ce que chaque corps de remplissage est constitué en un matériau composite à fibres courtes de renfort agglomérées par ladite résine thermoplastique, et qui assure la liaison de la coque à chaque partie de chaque longeron logée dans la coque.

Les pièces à base de matrices thermoplastiques prennent leurs formes définitives au moment de la fusion de la matrice, sur une plage de température d'environ 20°C au-dessous de la température de fusion proprement dite. Au refroidissement, la matrice revient à son état initial solide, et la pièce conserve sa forme définitive. Ce phénomène est réversible.

La transformation des matériaux composites à matrices thermoplastiques, par simple fusion ou ramollissement de celles-ci sous l'effet d'un chauffage, et sans modification chimique, permet des cadences de fabrication plus élevées de pales réalisées à l'aide de ces matériaux. Il en est d'autant plus ainsi que la polymérisation, que les composites à matrices thermodurcissables subissent, après drapage et mise en place dans un moule comme dans les procédés décrits dans les deux brevets précités, peut durer de 4 à 90 heures, suivant la nature et/ou l'épaisseur des composites. Au contraire, les composites à matrices thermoplastiques, qui ne connaissent pas de réaction chimique ni exothermique pendant leur transformation, et ce quelle que soit leur épaisseur, peuvent être mis en oeuvre rapidement, et de manière réversible, par un procédé élémentaire, qui, réduit à sa plus simple expression, consiste à chauffer ces composites pour fondre la matrice, à presser ces composites pour les compacter et/ou mettre en forme, et ensuite à les refroidir pour consolider leur matrice. Ces composites thermoplastiques peuvent donc être transformés à grande cadence. Leur caractère réversible, tel que mentionné ci-dessus, offre des possibilités de réparation, par chauffage puis remise en forme, des pales non conformes aux spécifications, par exemple dimensionnelles, ainsi que des possibilités de recyclage des matériaux utilisés. Il en résulte une diminution des rebuts. De plus, la matrice adhère à chaud sur elle-même. Cette propriété est particulièrement avantageuse puisqu'elle permet non seulement de procéder à des réparations localisées mais également, comme expliqué ci-dessous, la fabrication des pales par un procédé consistant à assurer, par injection sous pression d'un matériau composite à matrice thermoplastique en fusion, la liaison et l'assemblage de pièces élémentaires préfabriquées par une grande diversité de techniques de transformation et d'assemblage (compactage, estampage et pultrusion notamment), à partir de demi-produits réalisés en composites à matrices thermoplastiques et disponibles dans le commerce.

De plus, l'absence de réaction chimique et de réaction exothermique permet de s'affranchir des problèmes de climatisation des ateliers de fabrication des pales et de leurs composants, ainsi que des problèmes de stockage et de péremption des matériaux concernés.

Tous ces facteurs concourent à une réduction des coûts de fabrication et de fonctionnement des pales.

Pour réaliser les pales selon l'invention, on sélectionne avantageusement une résine thermoplastique qui est une résine de poly-ether-ether-cétone (PEEK), et les fibres de renfort, notamment de la coque, du ou des longerons, et du ou des corps de remplissage, sont choisies parmi les fibres de carbone ou de verre, mais, de préférence, sont toutes de même nature, et en particulier en carbone.

On utilise ainsi avantageusement des composites thermoplastiques dits "PEEK/carbone", qui, par rapport aux composites thermodurcissables des pales de l'état de la technique, présentent de plus les avantages d'un bon comportement mécanique général en statique, et d'une meilleure tenue à la fatigue, d'une bonne tolérance aux dommages et d'une grande résistance à l'environnement, et en particulier une insensibilité au vieillissement humide, une très bonne tenue en température, ainsi qu'aux chocs et impacts.

De plus, le choix d'une matrice PEEK permet d'obtenir un bon comportement au fluage et améliore la tenue en fatigue, qui est au moins deux fois supérieure à celle des diverses autres matrices thermoplastiques hautes performances connues et utilisées pour la réalisation de matériaux composites dans d'autres applications. Le choix d'une seule et même résine PEEK comme matrice et de fibres de renfort uniquement en carbone, ou éventuellement uniquement en verre, pour réaliser les différents éléments composites de la pale, évite toute disparité au niveau des résines d'agglomération et tout risque d'incompatibilité entre les différents constituants, contrairement aux pales décrites dans le brevet FR-2 616 409, dans lequel chaque résine thermodurcissable utilisée est adaptée à la nature des fibres de renfort, en verre, carbone ou aramide, qu'elle agglomère, ainsi qu'à la nature du ou des matériaux synthétiques, par exemple la mousse de polyuréthane, avec lequel ou lesquels elle est mise en contact.

Les composites thermoplastiques PEEK/carbone présentent donc des avantages de comportement en utilisation qui résultent de propriétés thermomécaniques remarquables, au moins du même ordre de grandeur, mais souvent même supérieures à celles de nombreux matériaux composites à matrices thermodurcissables utilisées pour la réalisation des pales de l'état de la technique.

On aboutit ainsi à une réduction du coût de fabrication et d'entretien ainsi qu'à une amélioration des pales selon l'invention par rapport à celles de l'état de la technique.

L'invention a également pour objet un procédé de fabrication de la pale présentée ci-dessus.

Le procédé de fabrication d'une pale selon l'invention, dont la coque composite est constituée d'un revêtement d'intrados et d'un revêtement d'extrados stratifiés, se caractérise en ce qu'il comprend les étapes suivantes, consistant :
- à réaliser chacun des revêtements stratifiés et longerons en composite thermoplastique de la pale sous la forme d'une pièce élémentaire préfabriquée,
- à disposer les pièces élémentaires préfabriquées dans un moule d'injection et d'assemblage sous pression, comprenant une partie de moule inférieure et une partie de moule supérieure comportant des empreintes internes complémentaires, présentant respectivement la forme de la partie d'intrados et de la partie d'extrados de la pale, de sorte que lesdites pièces élémentaires préfabriquées occupent dans le moule les positions respectives qu'elles occupent dans la pale,
- à fermer le moule et à injecter dans ce dernier, entre lesdits revêtements, un matériau composite fluide de fibres courtes de renfort noyées dans une matrice thermoplastique chauffée à une température de fusion, afin de former le ou les corps de remplissage et, le cas échéant, la manchette de renfort interne du pied de pale,
- à assurer une fusion, au moins locale, de la matrice desdites pièces élémentaires préfabriquées disposées dans le moule, dans leurs parties en contact avec le matériau composite fluide,
- à refroidir le moule, pour assurer la solidification de la matrice thermoplastique du matériau composite injecté et desdites pièces élémentaires, et la rigidification de l'ensemble ainsi assemblé des pièces élémentaires et du ou des corps injectés, et
- à démouler la pale ainsi obtenue.

Pour effectuer l'injection, le matériau composite à fibres courtes de renfort noyées dans une matrice thermoplastique en fusion est avantageusement obtenu en chauffant jusqu'à la fusion de ladite matrice, des granulés de fibres courtes contenues à l'état sec dans ladite matrice.

En outre, afin de profiter de la chaleur du matériau injecté pour obtenir la fusion locale de la matrice des pièces préfabriquées sans que le moule refroidisse trop sensiblement le matériau injecté, le procédé consiste avantageusement de plus à chauffer ledit moule à une température inférieure à la température de fusion de la matrice thermoplastique au cours de l'injection, et à assurer ladite fusion au moins locale de la matrice desdites pièces élémentaires par contact avec ledit matériau composite fluide injecté dans le moule.

Les différentes pièces élémentaires, préfabriquées par pultrusion ou compactage et estampage, notamment, peuvent être réalisées sous la forme d'éléments rigides, ayant un aspect cartonneux, ou semi-rigides, ayant l'aspect de feuilles ou plaques, sans pégosité, éventuellement à partir de demi-produits composites thermoplastiques disponibles dans le commerce, tels que des tissus ou nappes de fibres continues ou longues et unidirectionnelles de verre ou de préférence de carbone, agglomérées par une résine thermoplastique, de préférence une résine PEEK, ou de plaques obtenues par superposition puis compactage de plusieurs couches de tels tissus ou telles nappes.

L'invention sera mieux comprise, et d'autres caractéristiques et avantages de l'invention apparaîtront à la lecture de la description donnée ci-dessous d'un exemple de réalisation, décrit à titre non limitatif et en référence aux dessins annexés sur lesquels :
- la figure 1 est une vue en élévation latérale d'une pale pour rotor multi-pales, à pas variable, arrière et caréné d'hélicoptère,
- la figure 2 est une vue en plan, selon la flèche F de la figure 1, de cette pale,
- les figures 3 à 7 sont des vues en coupe transversale respectivement selon III-III, IV-IV, V-V, VI-VI et VII-VII de la figure 2,
- la figure 8 est une vue partielle en perspective du pied de pale, de la partie d'emplanture et de l'attache feuilletée de la pale des figures 1 et 2,
- la figure 9 est une vue analogue à la figure 8 d'une variante de réalisation, dans laquelle le longeron de la pale a été modifié pour que sa partie d'emplanture présente une attache en boucle, à la place de l'attache feuilletée,
- la figure 10 est une vue en plan d'une plaque précompactée dans laquelle sont découpés des panneaux de revêtement d'intrados et d'extrados de la coque de la pale des figures 1 à 8,
- les figures 11 et 12 représentent schématiquement deux étapes de la réalisation par estampage des revêtements d'intrados et d'extrados,
- la figure 13 représente schématiquement un revêtement estampé en élévation latérale,
- la figure 14 représente ce revêtement en plan selon la flèche F de la figure 13,
- les figures 15, 16, 17 et 18 représentent des vues en coupe transversale respectivement selon XV-XV, XVI-XVI, XVII-XVII, XVIII-XVIII de la figure 14,
- la figure 19 représente une vue en coupe selon XIX-XIX de la figure 16,
- la figure 20 représente en plan une plaque précompactée dans laquelle sont découpés des éléments feuilletés de l'attache feuilletée de la pale selon les figures 1 à 8,
- les figures 21 et 22 représentent schématiquement des étapes de la fabrication du longeron avec attache feuilletée de la pale selon les figures 1 à 8,
- les figures 23 et 24 représentent schématiquement, respectivement en plan et en élévation latérale, le longeron fabriqué,
- les figures 25, 26 et 27 représentent des vues en coupe transversale, respectivement selon XXV-XXV, XXVI-XXVI et XXVII-XXVII de la figure 24,
- les figures 28 et 29 représentent, en coupe longitudinale, la mise en place d'un outillage de positionnement sur le longeron des figures 23 et 24,
- la figure 30 est une coupe selon XXX-XXX de la figure 29,
- la figure 31 est une vue selon la flèche G de la figure 30,
- la figure 32 représente, en coupe longitudinale, la mise en place des revêtements et du longeron avec son outillage de positionnement dans le moule d'injection et assemblage,
- la figure 33 représente le moule de la figure 32 après fermeture,
- la figure 34 est une coupe selon XXXIV-XXXIV de la figure 33,
- la figure 35 représente, en coupe longitudinale, l'ouverture du moule des figures 32 et 33 et le retrait de l'outillage de positionnement des figures 28 et 29, pour le démoulage de la pale,
- la figure 36 est une vue analogue à la figure 29 pour une variante du procédé de fabrication de la pale dans laquelle les revêtements et des bagues formant des portées de rotation sont positionnés autour du longeron et de son outillage de positionnement selon la figure 29, et
- les figures 37, 38 et 39 sont des vues analogues respectivement aux figures 32, 33 et 35 pour cette variante du procédé.

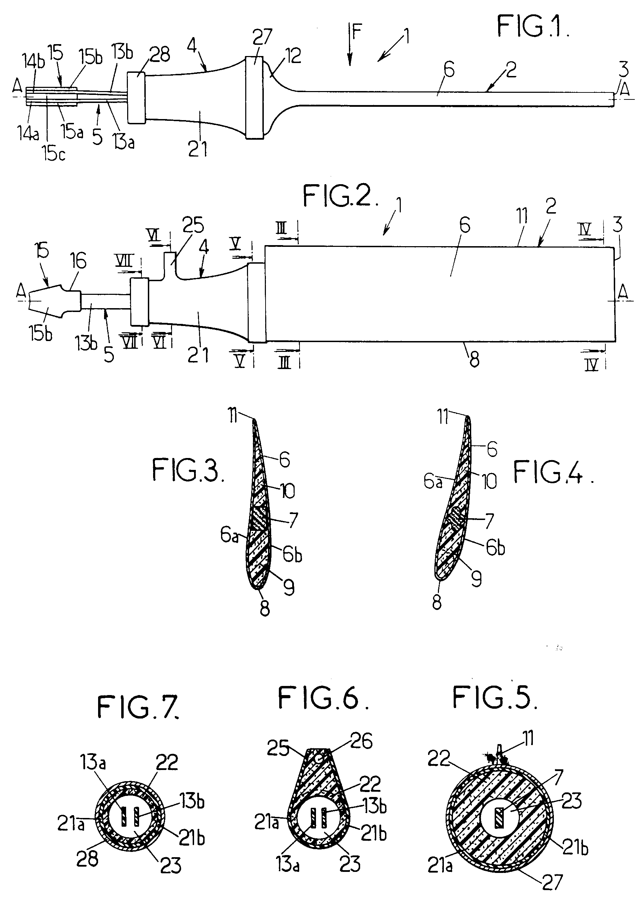

La pale 1 des figures 1 à 8 a sa partie courante ou profilée 2, de corde sensiblement constante, qui se prolonge, du côté opposé au bout de pale 3, par un pied de pale 4 tubulaire, traversé par une partie d'emplanture 5, par laquelle la pale 1 est destinée à être reliée à un moyeu de rotor (non représenté), et qui est constituée par une partie externe à la partie courante 2, d'un longeron 7 s'étendant sur toute l'envergure de la pale 1.

Dans sa partie courante 2, la pale 1 comprend :
- une coque rigide 6, ayant la forme du profil aérodynamique souhaité, et allongée longitudinalement selon l'envergure,
- le longeron 7, dont une partie rectiligne est logée longitudinalement dans la coque 6, selon l'envergure, et qui est sensiblement centré sur l'axe longitudinal A-A de la pale, qui est l'axe de changement de pas de la pale, à environ 40 % en corde à partir du bord d'attaque 8 de la pale,
- un corps de remplissage avant 9, logé dans la coque 6, entre le longeron 7 et le bord d'attaque 8, et
- un corps de remplissage arrière 10 logé dans la coque 6, entre le longeron 7 et le bord de fuite 11 de cette pale.

Dans sa partie courante 2, la pale peut également comprendre une coiffe (non représentée), en titane ou acier inoxydable, pour la protection du bord d'attaque 8.

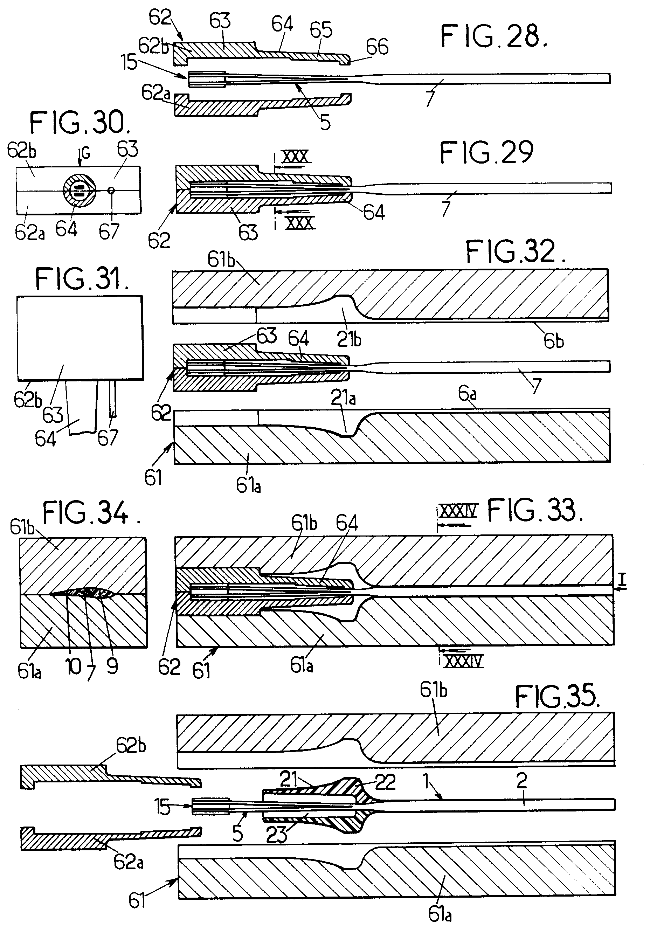

La partie du longeron 7 logée dans la coque 6 présente une section transversale de forme sensiblement rectangulaire, dont la plus grande dimension est dirigée selon la corde de la pale, ou contenue sensiblement dans le plan de rotation de la pale et perpendiculaire à l'axe longitudinal A-A, et ceci au moins dans la partie de longeron 7 voisine du pied de pale 4 (voir les figures 3 et 5), bien que cette partie de longeron 7 puisse présenter une section rectangulaire jusqu'au bout de pale 3. Cependant, comme représenté sur la figure 4, et au moins au voisinage du bout de pale 3, le longeron 7 présente une section cruciforme. Comme la coque 6 est constituée d'un revêtement d'intrados 6a et d'un revêtement d'extrados 6b, qui s'étendent chacun du bord d'attaque 8 au bord de fuite 11, la section en croix du longeron 7 permet de stabiliser les revêtements 6a et 6b sur les deux faces extrêmes du longeron 7 qui sont directement en regard de ces revêtements 6a et 6b, lors de l'injection et l'assemblage des différents composants de la pale, comme décrit ci-dessous en référence notamment aux figures 32 à 39. Que sa section soit sensiblement rectangulaire ou cruciforme, le longeron 7 n'est pas vrillé selon l'envergure, et autour de l'axe de changement de pas A-A, ce qui est favorable pour sa fabrication tout en permettant de lui donner les raideurs requises. Par contre, la section profilée des revêtements 6a et 6b ainsi que des corps de remplissage avant 9 et arrière 10 est progressivement vrillée autour de l'axe A-A de la pale, pour donner à cette dernière la loi de vrillage souhaitée, depuis la portion de partie courante 2 adjacente au pied 4 jusqu'au bout de pale 3, et comme représenté sur les figures 3 et 4. Ainsi, le précalage de la pale 1 est très facile à créer par rapport au plan de rotation du rotor.

Chaque revêtement 6a ou 6b est stratifié et constitué, de l'intérieur vers l'extérieur de la coque 6, d'un empilement d'un film de résine de polyetherimide (PEI), de deux couches de nappes de fibres continues et unidirectionnelles de carbone, orientées sensiblement selon l'axe longitudinal A-A, et agglomérées dans une matrice de polyether-ether-cétone communément appelée résine PEEK, et d'une couche de tissu de fibres de carbone, agglomérées dans la même résine PEEK, et dont les directions des fils de chaîne et de trame sont orientées sensiblement à 45° par rapport à l'axe longitudinal de la pale. La résine PEEK est un polymère thermoplastique à structure aromatique, comportant peu d'atomes d'hydrogène, et présentant une structure cristalline, une température de transition vitreuse d'environ 150°C, et une température de fusion de l'ordre de 390°C.

En variante, chacun des revêtements 6a et 6b peut être constitué d'un empilement comprenant plus d'une couche de tissu de fibres de carbone, par dessus les deux couches de nappes de fibres de carbone unidirectionnelles, et, éventuellement, d'un film de résine PEI recouvrant les couches de tissu. Quel que soit le nombre des couches de fibres formant l'empilement stratifié de chaque revêtement 6a ou 6b, l'ensemble de ces couches est aggloméré par la résine PEEK rigidifiée, de façon à former un caisson assurant, avec son remplissage, la rigidité en torsion de la pale 1, le film de résine PEI augmentant la teneur en résine à l'interface de la coque 6 avec son remplissage et permettant d'homogénéiser cet interface.

Les corps de remplissage avant 9 et arrière 10 sont chacun constitués en un matériau composite thermoplastique injecté, à matrice en résine PEEK dans laquelle sont noyées des fibres courtes de renfort en carbone, qui chargent la matrice à 30 % en masse environ.

Le longeron 7 est constitué d'un unique écheveau composite et allongé de fibres de carbone continues et unidirectionnelles, orientées longitudinalement selon l'axe A-A, et agglomérées également par de la résine PEEK. Cet écheveau est agencé, dans la coque 2, en une lame allongée de section pleine, entourée d'un film de résine PEI, et ayant, comme déjà dit, une forme rectangulaire ou cruciforme dans une portion plus ou moins longue, du côté du bout de pale 3, mais toujours rectangulaire dans sa portion adjacente au pied de pale 4. Par les faces supérieure et inférieure de cet écheveau, et le film de résine PEI qui homogénéise l'interface, le longeron 7 est rigidement lié, soit directement, soit par l'intermédiaire des corps de remplissage injectés 9 et 10, à la coque 6 dans laquelle il est reçu. Cet écheveau se prolonge axialement à l'extérieur de la coque 6, en traversant le pied tubulaire 4, et forme ainsi, par sa partie qui sort de la partie profilée 2, la partie d'emplanture 5 de cette pale. Au niveau de la zone de transition 12, par laquelle la coque 2 se raccorde au pied 4, qui la prolonge axialement, l'écheveau de section rectangulaire du longeron 7 se subdivise en deux faisceaux égaux 13a et 13b, ayant chacun également la forme d'une lame de section rectangulaire, qui s'écartent progressivement l'un de l'autre dans une direction perpendiculaire à la plus grande dimension de leurs sections, ainsi qu'à celle de la partie rectangulaire du longeron 7 dans la coque 6. A l'extrémité axiale de la partie d'emplanture 5, du côté opposé au pied 4, les deux faisceaux 13a et 13b de cette partie d'emplanture 5 présentent chacun une portion d'extrémité de liaison 14a ou 14b, parallèle à la portion d'extrémité de liaison de l'autre faisceau 13a ou 13b, et par laquelle chacun des faisceaux 13a et 13b est solidarisé à une attache feuilletée commune 15, qui constitue l'attache de liaison de la partie d'emplanture 5 à un moyeu (non représenté) de rotor. Les deux faisceaux d'attache de pale 13a et 13b, qui sont allongés sensiblement dans le prolongement longitudinal de la coque 6 et de la partie de longeron 7 interne à cette coque, ont donc chacun la même structure composite que la partie de longeron 7 interne à la coque 6, avec laquelle ils sont d'une seule pièce, et chacun des faisceaux 13a et 13b est torsible autour de son axe longitudinal, de sorte que la partie d'emplanture 5 est elle-même torsible autour de l'axe longitudinal A-A.

Une telle pale, avec une partie d'emplanture constituée de plusieurs faisceaux composites allongés et torsibles, dont les portions d'extrémité de liaison au moyeu sont solidaires d'une même attache feuilletée, pour la liaison à un moyeu de rotor dont la structure comprend des moyens adaptés à la retenue d'une telle attache feuilletée, est plus précisément décrite dans la demande conjointe précitée de la demanderesse, à laquelle on se reportera pour davantage de précisions sur la réalisation de l'attache feuilletée ainsi que sur la structure du moyeu et le montage de l'attache feuilletée sur le moyeu.

On rappelle que l'attache feuilletée 15 comprend un élément feuilleté inférieur 15a, un élément feuilleté supérieur 15b et un élément feuilleté intercalaire 15c, qui sont disposés à l'aplomb les uns au-dessus des autres, de sorte que la portion d'extrémité 14a de la lame inférieure 13a est prise en sandwich entre les éléments feuilletés inférieur 15a et intercalaire 15c, et que la portion d'extrémité 14b de la lame supérieure 13b est prise en sandwich entre les éléments feuilletés intercalaire 15c et supérieur 15b. Chacun des éléments feuilletés 15a, 15b et 15c est constitué d'un empilement de plusieurs couches de tissu de fibres de carbone agglomérées par de la résine PEEK, et dont les directions des fils de chaîne et de trame sont orientées sensiblement à 45° par rapport à l'axe longitudinal de la lame 13a ou 13b, ou d'un empilement de plusieurs couches de nappes de fibres continues et unidirectionnelles de carbone agglomérées par de la résine PEEK, les nappes étant alternativement croisées les unes par rapport aux autres dans l'empilement, de sorte que la direction des fibres unidirectionnelles d'une nappe soit sensiblement perpendiculaire à la direction des fibres de la ou des nappes adjacentes, l'orientation des nappes de l'empilement étant telle que les fibres unidirectionnelles des différentes nappes s'étendent sensiblement à 45° par rapport à l'axe longitudinal du faisceau 13a ou 13b. Par exemple, chacun des éléments feuilletés inférieur 15a et supérieur 15b peut être constitué par l'empilement de neuf couches de tissu ou de seize nappes, ou encore, en variante, d'un empilement comprenant des couches de tissu et des couches de nappes. L'élément feuilleté intercalaire 15c est un empilement constitué des mêmes couches de tissu et/ou couches de nappes, mais dont l'épaisseur est double de celle des éléments feuilletés inférieur 15a et supérieur 15b, l'élément intercalaire 15c étant par exemple réalisé en superposant deux éléments feuilletés tels que les éléments inférieur 15a ou supérieur 15b.

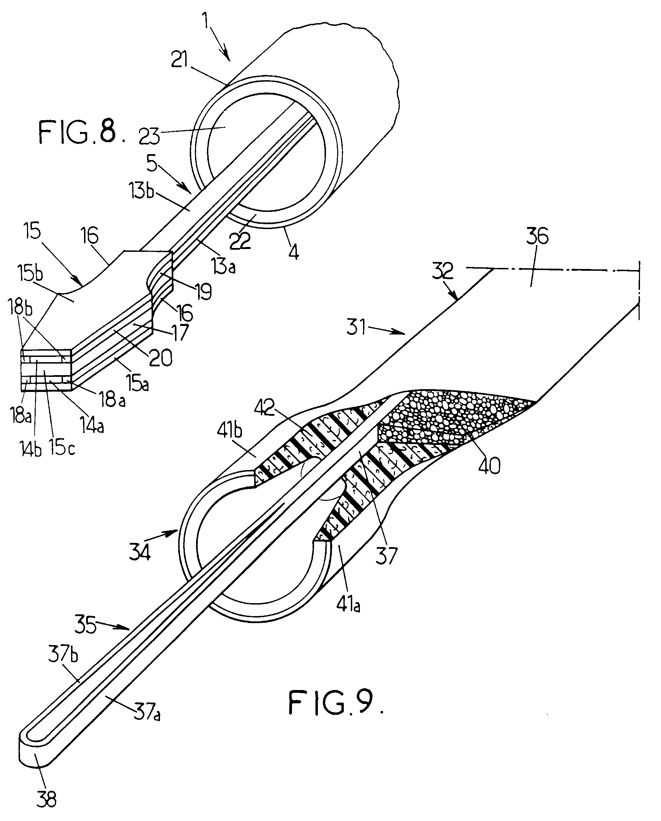

Comme représenté sur les figures 2 et 8, les trois éléments feuilletés 15a, 15b et 15c présentent, vus en plan, la même forme évasée latéralement des deux côtés des portions d'extrémité 14a et 14b, lesquelles sont de forme sensiblement rectangulaire dans le prolongement et à l'extrémité des lames 13a et 13b.

La forme évasée de chaque élément feuilleté 15a, 15b et 15c par rapport aux portions d'extrémité 14a et 14b est délimitée par les faces latérales de ces éléments, qui sont en saillie latérale par rapport aux portions d'extrémité 14a et 14b, et qui présentent, dans la partie de chaque élément feuilleté qui est tournée vers la coque 6, une zone concave 16, à concavité tournée latéralement d'un côté ou de l'autre de la pale et vers la coque 6, tandis que dans la partie d'extrémité des éléments feuilletés 15a, 15b et 15c qui est tournée du côté opposé à la coque 6, les faces latérales de ces éléments feuilletés présentent des zones planes 17 qui convergent l'une vers l'autre, en délimitant sur les éléments feuilletés une partie d'extrémité de forme sensiblement trapézoïdale.

Afin de combler l'espace délimité entre les parties en saillie par rapport aux portions d'extrémité 14a et 14b, de deux éléments feuilletés 15a, 15b et 15c voisins, l'attache feuilletée 15 comprend également quatre éléments feuilletés de remplissage latéral, dont deux, 18a (voir figure 8) sont disposés chacun en appui contre l'une des faces latérales de la portion d'extrémité 14a, et en sandwich entre les parties latérales saillantes des éléments feuilletés inférieur 15a et intercalaire 15c, et dont les deux autres 18b sont disposés chacun en appui contre l'une des faces latérales de la portion d'extrémité 14b et pris en sandwich entre les parties latéralement saillantes des éléments feuilletés intercalaire 15c et supérieur 15b. Les éléments feuilletés de remplissage latéral 18a et 18b sont d'une structure feuilletée analogue à celle des autres éléments feuilletés 15a, 15b, 15c, donc en composite PEEK/carbone, et leur face latérale opposée à celle par laquelle ils sont chacun appliqués contre l'une des portions d'extrémité 14a et 14b présente également, comme les faces latérales des éléments feuilletés 15a, 15b et 15c, une zone concave 19, qui est dans le prolongement des zones concaves 16 des éléments feuilletés 15a, 15b et 15c, ainsi qu'une zone plane 20, qui est dans le prolongement des zones planes 17 des éléments feuilletés 15a, 15b, 15c, et qui est donc convergente avec la zone plane 20 de l'autre élément feuilleté de remplissage latéral 18a ou 18b correspondant.

La solidarisation de tous les éléments feuilletés 15a, 15b, 15c, 18a, 18b de l'attache feuilletée 15 aux portions d'extrémité 14a et 14b des deux lames 13a et 13b de la partie d'emplanture 5 est assurée par la rigidification de la résine PEEK, qui agglomère toutes les fibres de renfort en carbone, en couches de nappes de fibres unidirectionnelles ou de tissu, qui constituent les éléments feuilletés de l'attache 15 ainsi que les lames 13a et 13b et leurs portions d'extrémité 14a, 14b.

Afin de faciliter la réalisation du longeron 7, à partie d'emplanture 5 intégrée, l'unique écheveau composite du longeron 7 est formé de deux faisceaux de même nature, constitués chacun par une lame pultrudée comprenant plusieurs nappes superposées de fibres continues et unidirectionnelles de carbone orientées selon l'axe A-A de la pale, et agglomérées par la résine PEEK, les différentes nappes de fibres superposées de chaque lame pouvant être obtenues par superposition d'un nombre égal de mêmes longueurs découpées dans un ruban de composite PEEK/carbone, à fibres de carbone unidirectionnelles et longitudinales. Les deux lames pultrudées sont maintenues espacées l'une de l'autre sur une partie de leur longueur, qui forme la partie d'emplanture 5, grâce à l'attache feuilletée 15, dont elles sont solidaires par leur extrémité correspondante, tandis que sur le reste de leur longueur, ces deux lames pultrudées sont entourées d'un film de résine PEI et superposées, avec interposition de trois nappes de fibres de carbone unidirectionnelles et longitudinales agglomérées par la résine PEEK, pour constituer la partie du longeron 7 reçue dans la coque 6.

En service, les efforts centrifuges qui s'exercent sur la pale 1 sollicitent le longeron 7 longitudinalement, de sorte que son attache feuilletée 15 vient en butée, par les évidements concaves formés latéralement des deux côtés par les faces latérales 16 et 19 de ses éléments feuilletés, contre des douilles, dont une au moins est amovible pour permettre le démontage individuel de la pale, qui sont solidarisées sur le moyeu, et situées chacune sur l'un des côtés de la partie d'emplanture 5, en s'étendant dans une direction sensiblement perpendiculaire au plan de rotation de la pale, lequel est sensiblement parallèle aux grandes faces supérieure et inférieure des éléments feuilletés et des lames torsibles de la partie d'emplanture 5.

Le pied 4, représenté en coupe sur les figures 5 à 7, comprend deux demi-coquilles complémentaires 21a et 21b, dont chacune a essentiellement la forme de la moitié d'un tube, de section variable, découpé axialement par un plan diamétral, et ces deux demi-coquilles 21a et 21b sont accolées l'une contre l'autre par leurs bords longitudinaux, de manière à reconstituer le tronçon de tube, et sont chacune constituée par un prolongement axial renforcé de l'un respectivement des deux revêtements 6a et 6b de la coque 6. Chaque demi-coquille 21a ou 21b est stratifiée et comprend non seulement le film de résine PEI et les différentes couches de tissu et nappes de fibres agglomérées par la résine PEEK qui constituent le revêtement 6a ou 6b qu'elle prolonge, mais en plus trois couches supplémentaires de renfort, localisées au niveau de ce prolongement, et qui sont par exemple des couches de tissu PEEK/carbone, dont les directions des fils de chaîne et de trame sont l'une sensiblement parallèle et l'autre sensiblement perpendiculaire à l'axe longitudinal A-A de la pale, ces couches de renfort supplémentaires venant par-dessus les autres couches du revêtement.

Afin de rigidifier le pied 4 en lui donnant une épaisseur suffisante, ces demi-coquilles 21a et 21b sont intérieurement renforcées par une manchette 22 tubulaire. Cette manchette 22 présente un passage axial et central 23, qui est traversé par les deux lames 13a et 13b de la partie d'emplanture 5, à proximité et au niveau de leur subdivision à partir de la lame de longeron 7 dans la coque 6, et ce passage 23 est délimité par une surface latérale interne de forme générale sensiblement tronconique, à petite base tournée vers la coque 6. La manchette 22 présente de plus une surface latérale externe de forme générale également sensiblement tronconique, mais à grande base tournée vers la coque 6, donc à conicité inversée par rapport à celle du passage interne 23. La manchette 22, qui est entourée des demi-coquilles 21a et 21b, dont la forme correspond à celle de la surface latérale externe de la manchette 22 contre laquelle elles sont appliquées, s'amincit de la sorte progressivement de son extrémité adjacente à la coque 6 jusqu'à son extrémité tournée vers l'attache feuilletée 15. Comme les corps de remplissage 9 et 10, qu'elle prolonge dans le pied 4, la manchette 22 est réalisée par injection en composite de fibres courtes de renfort en carbone, noyées dans la matrice PEEK, laquelle est chargée à 30 % en masse des fibres de renfort.

Les demi-coquilles 21a et 21b, solidaires l'une de l'autre et de la manchette 22, constituent un manchon 21 de commande du pas de la pale, qui est aménagé en palier d'encastrement et de rotation du pied 4 sur un moyeu. Ce manchon 21, visible sur les figures 1, 2 et 8, présente une forme générale sensiblement tronconique, à grande base tournée vers la coque 6, au niveau de ses surfaces latérales interne et externe. Pour permettre son articulation à un dispositif de commande collective du pas des pales d'un moyeu multi-pales à pas variable comprenant une pluralité de pales telle que la pale 1, le manchon 21 et la manchette 22 comportent, en saillie radiale vers l'extérieur, un levier de commande de pas 25. Ce levier 25 est percé d'une ouverture 26 pour le logement d'une articulation à rotule de liaison au dispositif de commande collective du pas, d'une manière décrite dans la demande conjointe précitée, ainsi que dans les brevets précités, auxquels on se reportera pour davantage de précisions sur ce montage et sur la structure du dispositif de commande collective de pas.

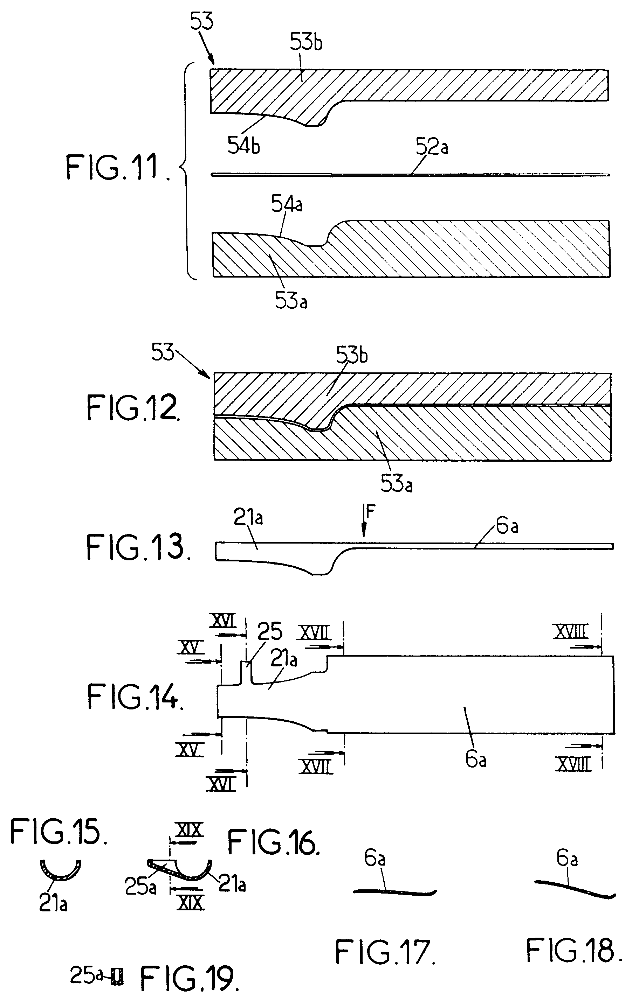

Dans une variante plus lourde, ce manchon peut être un manchon métallique monté autour des demi-coquilles 21a et 21b, comme décrit en référence à la figure 14 du brevet FR-2 616 409 précité, et son montage peut correspondre à la représentation de la figure 16 du même brevet, le manchon métallique étant alors rapporté par collage ou frettage sur le pied de la pale assemblée. De manière connue, le montage par frettage est assuré en chauffant le manchon, en l'emmanchant sur le pied de pale, puis en le refroidissant.

Enfin, le manchon 21 est solidaire et entouré, au niveau de chacune de ses extrémités axiales, d'une bague 27 ou 28, réalisée en métal ou en céramique, qui constitue une portée de rotation du manchon 21 sur le moyeu, ces bagues 27 et 28 étant solidarisées au manchon 21 par collage ou frettage, ou lors de la phase d'injection et assemblage de la pale dans le procédé décrit ci-dessous.

La pale 1 est ainsi telle que tous ses composants, à l'exception des bagues 27 et 28 et, éventuellement, du manchon 21, sont réalisés en composite PEEK/carbone, l'assemblage des différents composants et la cohésion de la pale étant assurés par la résine PEEK, avec l'assistance très partielle des films de PEI.

Une variante de cette pale est représentée sur la figure 9. La pale 31 selon cette variante ne diffère essentiellement de celle des figures 1 à 8 que par la structure de sa partie d'emplanture 35, qui n'est plus munie d'une attache feuilletée, mais d'une partie d'emplanture 35 à boucle de liaison. Dans cette variante, le longeron 37 est également constitué d'un écheveau de fibres de renfort continues et unidirectionnelles de carbone, agglomérées par la résine PEEK, et qui présente deux parties parallèles et accolées l'une à l'autre, le long de l'axe longitudinal de la pale 31, pour constituer deux faisceaux de longeron accolés et reçus dans la coque 36 en partie courante ou profilée 32 de la pale 31. Ces faisceaux du longeron 37 sont reliés l'un à l'autre par une partie en boucle sensiblement aplatie, qui constitue la partie d'emplanture 35 proprement dite, et dont l'extrémité externe à la coque 36 est enroulée en boucle 38 et forme une attache en boucle de liaison au moyeu (non représenté) pour entourer une douille par laquelle la pale 31 est destinée à être individuellement rattachée de manière amovible au moyeu, par un boulon, de la manière décrite dans les brevets précités. Cette attache en boucle 38 est reliée au deux faisceaux du longeron 37 reçus dans la coque 36 par deux parties d'écheveau formant deux faisceaux d'attache torsibles 37a et 37b de la partie d'emplanture 35. Pour le reste de la structure de cette pale 31, on retrouve dans la coque 36 un corps de remplissage avant (non représenté) et un corps de remplissage arrière 40 qui sont des corps injectés en composite PEEK/carbone à fibres courtes de renfort, la coque 36 est réalisée comme la coque 6 de la pale 1, le pied de pale 34, représenté sur la figure 9 sans ses bagues de rotation, comprend également des demi-coquilles stratifiées et renforcées 41a et 41b prolongeant les revêtements stratifiés d'intrados et d'extrados de la coque 36, avec trois couches supplémentaires de tissu de renfort PEEK/carbone pour constituer un manchon de commande de pas, et une manchette de renfort interne 42, réalisée par injection en composite PEEK/carbone à fibres courtes de renfort.

Le procédé de fabrication de la pale des figures 1 à 8 comprend une étape essentielle d'assemblage par injection sous pression qui permet d'assembler certains composants en composite PEEK/carbone de la pale, après que ces composants aient été préfabriqués sous la forme de pièces élémentaires, par l'injection d'un matériau composite thermoplastique fluidifié, à matrice PEEK et fibres courtes de renfort en carbone noyées dans la matrice, qui constitue les autres composants en composite PEEK/carbone de la pale et assure la liaison entre les pièces élémentaires préfabriquées.

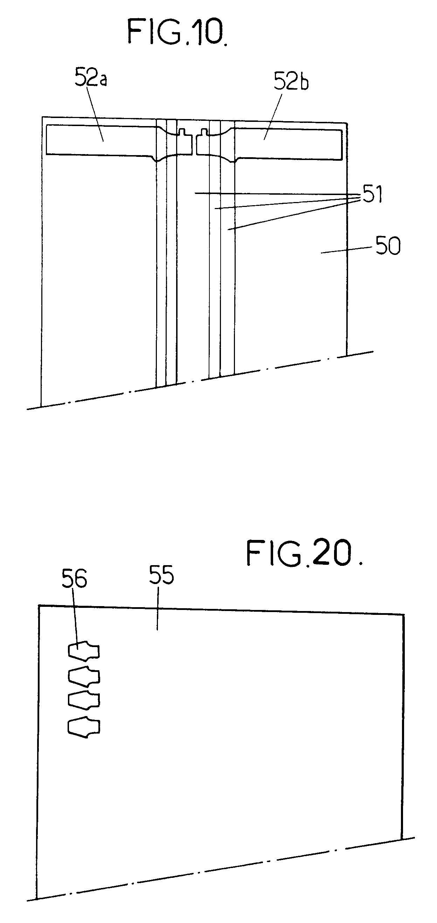

Pour réaliser chaque revêtement d'intrados ou d'extrados 6a ou 6b sous la forme d'une pièce élémentaire préfabriquée en composite PEEK/carbone, on commence par réaliser une plaque 50 (voir figure 10) constituée par la superposition d'autant de couches rectangulaires planes à l'état semi-rigide de fibres de carbone agglomérées par de la résine PEEK, que les revêtements 6a et 6b comprennent de couches, et de même nature, c'est-à-dire, pour l'exemple considéré, et de l'intérieur vers l'extérieur de la coque 6, de deux couches de nappes de fibres continues et unidirectionnelles de carbone, orientées selon la largeur de la plaque 50, dont la direction correspond à la direction longitudinale ou envergure de la coque 6, et qui est supérieure à deux fois l'envergure de cette coque 6, et d'au moins une couche supérieure de tissu de fibres de carbone agglomérées par la résine PEEK et dont les directions des fils de trame et de chaîne sont inclinées à 45° par rapport à la largeur de la plaque 50. L'empilement comprend également trois bandes de renfort 51, de largeur constante, mais, par exemple, d'épaisseur croissante d'une bande 51 à l'autre, de la bande la plus externe à la bande la plus interne à l'empilement, ces bandes 51 étant également à l'état semi-rigide, et en tissu de fibres de carbone agglomérées par de la résine PEEK, mais dont les directions des fils de chaîne et de trame sont orientées l'une selon la largeur et l'autre selon la longueur de la plaque 50, ces bandes 51 s'étendant longitudinalement au travers de la partie centrale de la plaque 50, laquelle partie centrale est destinée à former les prolongements renforcés en demi-coquilles 21a et 21b des revêtements 6a et 6b de la coque 6. Sur la face de l'empilement destinée à être tournée vers l'intérieur de la coque 6, on dispose de plus un film de résine PEI, afin d'augmenter la teneur en résine à l'interface avec les composants internes à la coque 6 et d'homogénéiser cet interface.

L'empilage de ces couches et bandes est chauffé à une température de fusion de la matrice PEEK, de l'ordre de 400°C, et mis sous une faible pression, de l'ordre de 0,1 à 0,5 MPa, dans un moule de compactage, pour assurer la liaison entre les différentes couches et bandes de fibres par la matrice PEEK. Puis l'empilement est refroidi et on obtient par solidification de la résine PEEK une plaque 50 précompactée, essentiellement en composite PEEK/carbone à l'état sensiblement rigide, dans laquelle on découpe ensuite, par jet de fluide, des panneaux tels que 52a et 52b, disposés sensiblement bout à bout selon la largeur de la plaque 50, et tournés l'un vers l'autre par les prolongements destinés à former les demi-coquilles 21a et 21b du pied de pale, et chacun de ces panneaux 52a et 52b présentant la forme développée à plat respectivement du revêtement d'intrados 6a et d'extrados 6b.

Chaque panneau plat 52a ou 52b est ensuite conformé à la forme souhaitée du revêtement d'intrados 6a ou d'extrados 6b correspondant par estampage dans un moule d'estampage.

Ce procédé d'estampage est mis en oeuvre comme représenté sur les figures 11 et 12, dans un moule d'estampage comportant une partie de moule inférieure 53a, formant matrice, et une partie de moule supérieure 53b, formant poinçon, qui présentent chacune l'une respectivement de deux empreintes complémentaires 54a et 54b correspondant aux formes interne et externe du revêtement stratifié 6a ou 6b que ce moule d'estampage 53 permet de réaliser.

A titre d'exemple, le moule d'estampage 53 des figures 11 et 12 permet la mise en forme des revêtements d'intrados 6a. L'empreinte 54a interne à la partie de moule inférieure 53a correspond ainsi à la forme externe du revêtement d'intrados 6a, tandis que l'empreinte 54b interne à la partie de moule supérieure 53b correspond à la forme interne de ce même revêtement d'intrados 6a. Sur la figure 11, entre les deux parties de moule 53a et 53b écartées l'une de l'autre, et maintenues chacune à une température inférieure à la température de fusion de la matrice PEEK, par exemple de l'ordre de 150°C, on dispose le panneau plat 52a ayant la même structure que le revêtement d'intrados 6a mais la forme de ce dernier telle que développée à plat. Ce panneau 52a est disposé dans le moule 53 après préchauffage à une température de l'ordre de 400°C, par exemple aux infra-rouges ou par passage dans un four tunnel à air chaud pulsé, puis les deux demi-moules 53a et 53b sont fermés, comme représenté sur la figure 12, pour assurer la mise en forme au profil souhaité du revêtement d'intrados 6a. Après refroidissement dans le moule 53 fermé, la matrice PEEK se solidarise, le moule 53 est ouvert et le revêtement d'intrados 6a peut être démoulé, comme représenté sur les figures 13 et 14. Les sections des figures 17 et 18 représentent l'évolution du vrillage de ce revêtement d'intrados 6a dans la partie courante 2 de la pale, et les sections des figures 15, 16, 17 et 19 montrent la demi-coquille 21a formée dans le prolongement axial du revêtement d'intrados 6a, avec sa moitié 25a de section transversale en U, du levier de commande de pas 25.

Le revêtement d'extrados 6b est réalisé de la même manière par estampage d'un panneau 52b dans un moule d'estampage analogue au moule 53, et dont les empreintes des deux parties de moule correspondent respectivement à la forme externe et à la forme interne de ce revêtement d'extrados 6b, ainsi que de sa demi-coquille 21b avec sa moitié de levier de pas.

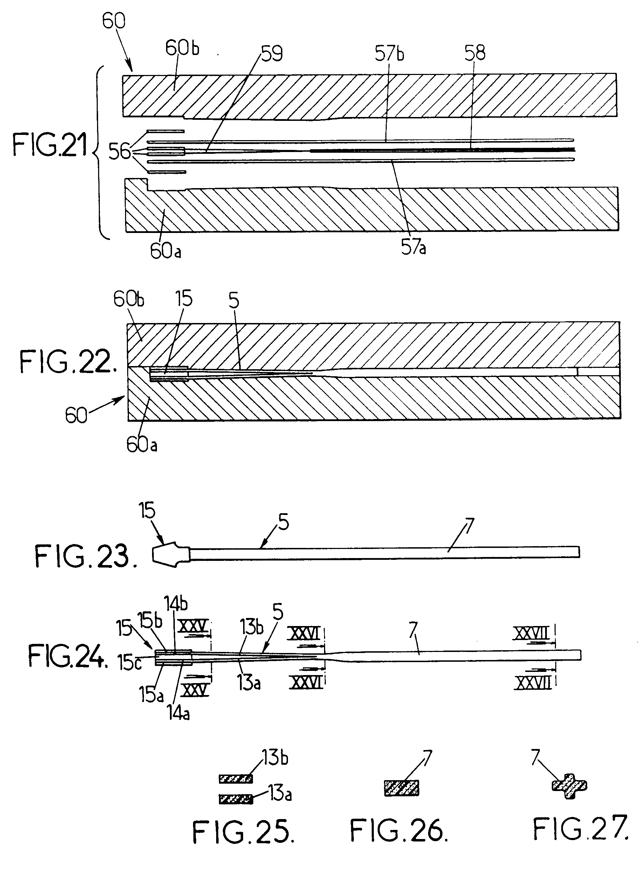

La pièce élémentaire en composite PEEK/carbone, qui constitue le longeron 7 avec partie d'emplanture 5 intégrée à attache feuilletée 15, est réalisée de la manière suivante. On réalise une plaque 55 (voir figure 20) en empilant par exemple seize couches rectangulaires à l'état rigide de nappes de fibres de carbone continues et unidirectionnelles agglomérées par la résine PEEK, les nappes étant croisées d'une couche à l'autre dans l'empilement de sorte que l'orientation des fibres d'une couche soit perpendiculaire à celle des fibres de la couche ou des couches voisines dans l'empilement, et que les orientations des fibres des différentes nappes soient sensiblement à ± 45° par rapport à la direction de la longueur ou de la largeur de la plaque 55. On compacte ensuite l'empilement dans un autoclave de compactage, dans lequel l'empilement est porté à une température de l'ordre de 400°C pour fondre la résine PEEK, et on le soumet à une pression de l'ordre de 0,1 à environ 0,5 MPa, exercée par une presse dans l'autoclave ou par la technique du "sac à vide", c'est-à-dire que l'empilement est disposé dans une vessie étanche en un film de polyimide, par exemple de dénomination commerciale UPILEX S, supportant la température de fusion de la matrice PEEK, cette vessie étant reliée à une source de dépression, qui permet de faire un vide relatif dans la vessie pour compacter l'empilement. Puis, après refroidissement et solidification de la résine PEEK qui solidarise toutes les couches de l'empilement, on obtient une plaque 55 précompactée, dans laquelle on découpe par jet de fluide des éléments feuilletés 56, dont chacun a une forme et une structure lui permettant de constituer l'élément feuilleté inférieur 15a ou supérieur 15b de l'attache feuilletée 15, tandis que deux éléments feuilletés 56 superposés sont nécessaires pour constituer l'élément feuilleté intercalaire 15c de cette attache feuilletée 15.

En variante, la plaque 55 peut être constituée par compactage de neuf couches de tissu de fibres de carbone agglomérées par la résine PEEK et dont les directions des fils de trame et de chaîne sont inclinées à ± 45° par rapport à la largeur ou la longueur de la plaque 55.

Les éléments feuilletés de remplissage latéral 18a et 18b de l'attache feuilletée 15 sont également découpés par jet de fluide dans la plaque 55, ou, si nécessaire, dans une autre plaque précompactée analogue et d'épaisseur appropriée.

Le longeron 7 proprement dit est essentiellement constitué de deux lames réalisées par pultrusion en fibres de carbone continues et unidirectionnelles agglomérées par la résine PEEK. Chaque lame est un profilé pultrudé, fabriqué par un procédé connu et à l'aide d'un dispositif connu, dont les caractéristiques essentielles sont rappelées ci-dessous.

On sait que la pultrusion est un procédé de fabrication par extrusion par étirage qui est spécifique aux matériaux composites à matrice organique, et qui permet de réaliser en continu des profilés pleins ou creux et de section constante. Ce procédé consiste essentiellement à tirer des fibres continues de renfort, sous la forme de stratifils de carbone, à travers un bac d'imprégnation en résine, puis une filière chauffée, dans laquelle s'effectue la mise en forme par compactage du profilé pultrudé de résine PEEK enveloppant les stratifils de carbone. Ces profilés pultrudés peuvent présenter des taux élevés, de l'ordre de 40 à 60 %, de fibres de renfort en volume, et donc de bonnes performances mécaniques dans le sens longitudinal. La pultrusion permet également de mouler en continu des profilés en stratifiés, les profilés étant élaborés par étirage de nappes de fibres imprégnées à travers une filière. Au cours du passage dans la filière chauffée, les nappes sont compactées et forment, en sortie, un profilé aux dimensions précises et d'un bon aspect de surface. Ce procédé permet donc de réaliser des profilés pleins en résine PEEK et renfort en fibres continues et unidirectionnelles de carbone qui constituent les lames utilisées pour réaliser le longeron 7 de la pale. La ligne de pultrusion qui permet de réaliser ces profilés est classique, et n'est donc pas décrite en détail.

De tels profilés pultrudés, d'une excellente stabilité dimensionnelle, présentent une rigidité remarquable ainsi qu'une bonne absorption des vibrations lorsqu'ils sont soumis à des efforts de fatigue. Ces profilés pultrudés sont donc appropriés pour être utilisés comme lames de longeron dans des pales très sollicitées mécaniquement et thermiquement pendant de longues durées de vie.

Dans cet exemple, le profilé pultrudé de chaque lame est réalisé à partir de rubans ou nappes de fibres continues, unidirectionnelles et longitudinales de carbone agglomérées par de la résine PEEK, par passage dans une filière portée à une température de 400°C environ pour faire fondre la matrice PEEK. Chacune des deux lames pultrudées identiques 57a et 57b du longeron 7 est par exemple constituée d'un profilé pultrudé de seize nappes de telles fibres. Comme représenté sur la figure 21, les lames pultrudées 57a et 57b sont disposées dans un moule 60 de compactage du longeron 7 qui comprend une partie inférieure de moule 60a et une partie supérieure de moule 60b présentant chacune une empreinte interne ayant respectivement la forme de la partie inférieure et de la partie supérieure du longeron 7 fabriqué, sauf au niveau de l'attache feuilletée 15, pour laquelle l'empreinte correspondante est essentiellement ménagée dans la partie inférieure de moule 60a. Les lames 57a et 57b sont superposées, le long de la partie de leur longueur qui doit être reçue dans la coque 6, avec interposition entre elles de trois nappes 58, à l'état semi-rigide, de fibres continues et unidirectionnelles de carbone, orientées longitudinalement, et agglomérées par de la résine PEEK.

Avant mise en place des lames 57a, 57b et nappes 58 dans le moule 60, un film de résine PEI d'environ 0,1 mm d'épaisseur est mis en place dans la partie de l'empreinte de la partie inférieure de moule 60a qui correspond à la partie de longeron 7 logée dans la coque 6. Puis, après empilage de la lame 57a, des nappes 58 et de la lame 57b dans cette partie inférieure de moule 60a, le film de résine PEI est replié par dessus les lames 57a, 57b et les nappes 58 de façon à envelopper les éléments constitutifs de la partie de longeron reçue dans la coque 6. Ce film de PEI est destiné à augmenter la teneur en résine à l'interface entre le longeron 7 et les autres constituants dans la coque 6. Afin de maintenir écartées l'une de l'autre les parties de la longueur des deux lames 57a et 57b qui doivent constituer les lames torsibles 13a et 13b de la partie d'emplanture 5, un outillage en forme de coin en acier 59 est interposé entre ces parties des lames 57a et 57b. Puis chacune des portions d'extrémité de ces parties séparées des lames 57a et 57b, laquelle portion d'extrémité est destinée à former la portion d'extrémité de liaison 14a ou 14b de la lame torsible 13a ou 13b correspondante, est disposée en sandwich entre deux éléments feuilletés 56 préfabriqués, tels que découpés dans la plaque précompactée 55 de la figure 20. Les deux éléments feuilletés 56 ainsi directement superposés l'un à l'autre, entre les portions d'extrémité des parties écartées des deux lames 57a et 57b, sont disposés directement derrière le coin en acier 59, sur les faces duquel un démoulant en aérosol, par exemple du type connu sous la dénomination "FREKOTE", est vaporisé avant mise en place. Cette couche de démoulant a pour effet de faciliter le retrait de l'outillage amovible constitué par le coin en acier 59 après le compactage du longeron. Ce compactage est assuré par fermeture du moule, comme représenté sur la figure 22, alors que tous les éléments composites contenus dans le moule sont échauffés à une température de l'ordre de 400°C pour assurer la mise en fusion de la matrice PEEK, et que ces composants sont simultanément soumis à une pression de l'ordre de 0,6 MPa. Les trois nappes de fibres unidirectionnelles 58, qui sont disposées en regard de l'extrémité du coin amovible 59, et qui sont intégrées dans le longeron 7 par l'opération de compactage, ont pour rôle d'éviter toute déformation en épaisseur des lames 57a et 57b du longeron, au niveau de l'extrémité du coin métallique 59, du fait que cette extrémité ne peut être d'une épaisseur rigoureusement nulle. Ainsi, la matrice PEEK assure la solidarisation des quatre éléments feuilletés 56 aux extrémités des parties écartées des deux lames 57a et 57b du longeron, ainsi que la solidarisation des deux éléments feuilletés 56 directement superposés pour constituer l'élément feuilleté intercalaire 15c de l'attache feuilletée 15, et également la solidarisation entre elles des parties superposées des deux lames 57a et 57b et des trois nappes intercalaires de fibres 58. Après refroidissement et solidification de la résine PEEK, le moule 60 est ouvert et le longeron 7 compacté et fabriqué d'une seule pièce est démoulé et présente la structure représentée sur les figures 23 et 24 et telle que déjà décrite ci-dessus. En particulier, chacune des deux lames pultrudées 57a et 57b du longeron 7 constitue, d'une part, un faisceau de longeron reçu dans la coque 6 et solidaire du faisceau correspondant de l'autre lame, et, d'autre part, un faisceau d'attache de pale 13a ou 13b, relié à l'autre par sa portion d'extrémité de liaison 14a ou 14b par l'intermédiaire de l'attache feuilletée commune 15.

Les deux revêtements 6a, 6b et le longeron 7 ayant été réalisés sous la forme de pièces élémentaires préfabriquées en composite thermoplastique PEEK/carbone, ces pièces sont disposées dans un moule d'assemblage par injection sous pression de la pale, schématiquement représentée sur la figure 32, ce moule 61 comprenant une partie de moule inférieure 61a et une partie de moule supérieure 61b qui comportent des empreintes internes complémentaires présentant, respectivement, la forme de la partie d'intrados et de la partie d'extrados de la pale, les pièces élémentaires préfabriquées étant disposées dans ce moule de sorte qu'elles occupent dans ce dernier les positions respectives qu'elles occupent dans la pale 1.

A cet effet, il est préalablement nécessaire de disposer le longeron 7 dans un outillage de positionnement 62, comme représenté sur les figures 28 à 31. Cet outillage 62 comprend une partie inférieure 62a et une partie supérieure 62b qui sont complémentaires et symétriques l'une de l'autre, de façon à n'envelopper que la partie d'emplanture 5 et l'attache feuilletée 15 du longeron 7, en laissant libre la partie de longeron 7 destinée à être reçue dans la coque 6. Chaque partie inférieure 62a ou supérieure 62b comprend une embase 63 de forme sensiblement parallélépipédique, avec un évidement interne logeant, sans jeu, la moitié respectivement inférieure ou supérieure de l'attache feuilletée 15, et, avec du jeu, la moitié respectivement inférieure ou supérieure de la partie d'emplanture 55, et chaque embase 63 se prolonge axialement par un embout 64, ayant la forme d'un demi tube sensiblement tronconique de section circulaire. Dans sa partie adjacente à l'embase 63, l'évidement interne à l'embout 64 prolonge l'évidement interne à l'embase 63 et entoure avec du jeu la moitié respectivement supérieure ou inférieure de la partie d'emplanture 5. Par contre, dans sa partie située du côté opposé à l'embase 63, l'embout 64 est surépaissi vers l'intérieur dans une portion 65, à évidement interne sensiblement en demi tronc de cône, qui entoure pratiquement sans jeu la portion de la partie d'emplanture 5 où les lames 13a et 13b sont faiblement écartées l'une de l'autre, et qui se termine par une extrémité 66 radialement saillante vers l'intérieur, qui s'applique contre la face plane respectivement inférieure ou supérieure de la partie du longeron 7 où les lames 13a et 13b se rejoignent. De la sorte, les embouts 64 constituent des noyaux de moulage pour la formation du passage central 23 du pied 4 (voir figures 5 à 7).

Parallèlement à l'axe de son évidement, chaque embase 63 présente, dans son plan de contact avec l'autre embase 63 pour la fermeture des parties d'outillage 62a et 62b autour de la partie d'emplanture 5 et de son attache feuilletée 15, une gouttière semi-cylindrique, qui forme, avec la gouttière en regard de l'autre embase 63, un canal dans lequel un axe 67 est partiellement introduit axialement, de sorte que la partie de l'axe 67 en saillie hors de l'outillage 62 sert de noyau de moulage pour la formation de l'évidement 26 (voir figure 6) dans le levier 25 du pied 4.

L'ensemble constitué du longeron 7, de son outillage de positionnement 62 et de l'axe 67, tel que représenté sur les figures 29, 30 et 31, est ensuite mis en place entre les parties inférieure 61a et supérieure 61b du moule d'injection 61 ouvert, après mise en place des revêtements d'intrados 6a et d'extrados 6b dans les empreintes des parties de moule respectivement inférieure 61a et supérieure 61b. Ces revêtements 6a et 6b, qui sont rigides, peuvent être maintenus en place dans les empreintes du moule 61 par des dispositifs d'aspiration (non représentés) ménagés de façon connue dans les parties de moule 61a et 61b, également équipées, de façon connue, d'un dispositif de chauffage et de refroidissement (également non représenté).

Le moule d'injection 61 est ensuite fermé, comme représenté sur la figure 33, de sorte qu'il subsiste une cavité de moulage par injection, délimitée à l'intérieur des revêtements 6a et 6b, entre ces derniers et le longeron 7, et entre leurs coquilles 21a et 21b et le noyau formé par les embouts 64 de l'outillage de positionnement 62.

On procède ensuite à l'opération de moulage par injection.

Il est connu de mouler des pièces en thermoplastique renforcé de fibres par injection à partir d'un demi-produit sous forme de poudre ou de granulés sur presse à injecter et selon un cycle de fabrication qui comporte cinq étapes principales : à savoir, la plastification de la matière, la fermeture du moule, le remplissage du moule sous pression, le refroidissement, et le démoulage de la pièce.

L'ensemble des dispositifs nécessaires à la mise en oeuvre de ces étapes étant connu, la description de l'outillage de moulage par injection dans le présent mémoire a été limitée au moule d'injection 61 et à l'outillage de positionnement 62, car les autres dispositifs sont classiques et sans originalité.

On indique cependant que la matière moulée par injection est un matériau composite à base de granulés de matrice PEEK dans laquelle sont noyées des fibres courtes de carbone. Ces granulés de composite thermoplastique PEEK/carbone sont des demi-produits disponibles par exemple sous les références commerciales 150CA30 ou 450CA30 auprès de la société britannique ICI ou de ses filiales. Il s'agit de granulés de 2 à 4 mm de longueur et de 1 à 3 mm de diamètre, de résine PEEK chargée à environ 30 % en masse de carbone en fibres courtes contenues à l'état sec dans la résine PEEK. Avant toute utilisation, ces granulés sont étuvés à une température d'environ 150°C pendant au moins trois heures. Puis ces granulés sont chauffés à une température de fusion de la matrice PEEK, de l'ordre de 400°C, et le matériau composite fluidifié par fusion de sa matrice est ensuite injecté dans le moule 61 fermé, maintenu à une température comprise entre environ 150°C et environ 200°C, mais de préférence voisine de 150°C.

L'injection s'effectue entre les extrémités des revêtements 6a et 6b formant le bout de pale 3, selon la flèche I sur la figure 33, et le composite fluidifié à 400°C remplit tout le volume libre à l'intérieur des revêtements 6a et 6b et autour du longeron 7 et des embouts 64, en moulant ainsi les corps de remplissage 9 et 10 et la manchette 22 du pied de pale. Par apport de chaleur par la matière injectée à 400°C environ, il se produit une fusion locale de la matrice PEEK des revêtements 6a et 6b et du longeron 7, dans leurs parties en contact avec cette matière injectée. Du fait également de la pression d'injection et des films de PEI aux interfaces entre le longeron 7 et les revêtements 6a et 6b, d'une part, et le matériau injecté, d'autre part, on obtient que ce longeron 7 est lié aux revêtements 6a et 6b par le composite injecté de même nature (même matrice PEEK et fibres de carbone) avec une bonne homogénéité de la résine aux interfaces.

Après l'injection, le refroidissement du moule 61 et de son contenu assure ensuite la solidification de la matrice PEEK du matériau injecté, formant les corps de remplissage 9 et 10 et la manchette 22, comme celle du longeron 7 et des revêtements 6a et 6b, qui sont assemblés les uns aux autres avec une bonne cohésion par l'intermédiaire du matériau injecté.

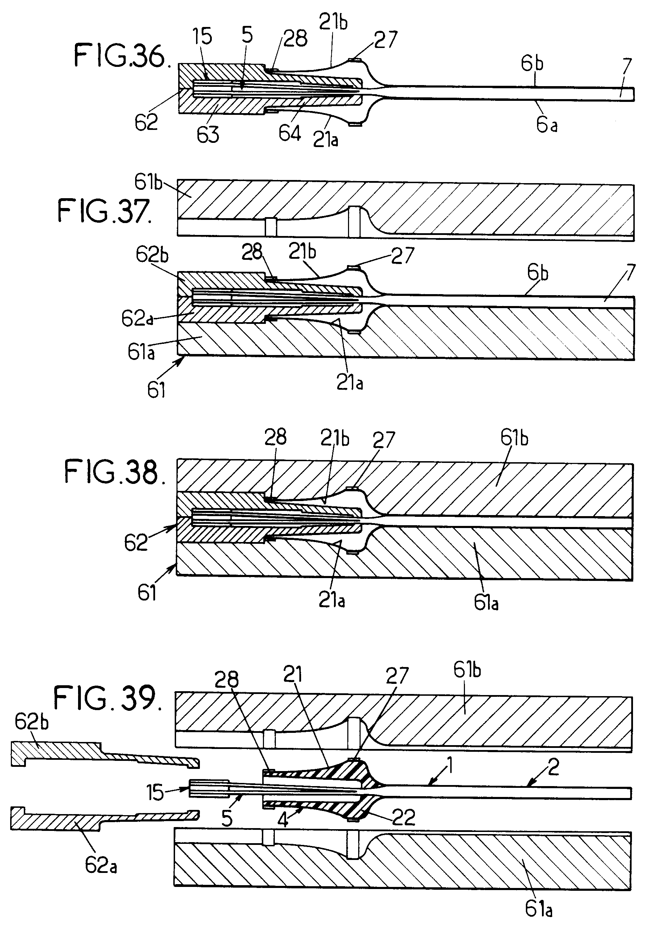

Après refroidissement, l'ouverture du moule 61 et le retrait des parties d'outillage de positionnement 62a et 62b formant noyau de moulage, comme représenté sur la figure 35, permettent de démouler une pale formée par l'ensemble convenablement rigidifié des pièces élémentaires préfabriquées (6a, 6b, 7) et des composants injectés (9, 10, 22). En effet les caractéristiques mécaniques du matériau composite injectable à chaud tel que décrit et utilisé ci-dessus sont très satisfaisantes, puisque, dans des conditions d'utilisation à température ambiante de 23°C, par exemple, le module d'YOUNG en traction est de 24000 MPa, et la résistance à rupture en traction statique voisine de 200 MPa. On constate que ces valeurs sont du même ordre de grandeur que celles d'un tissu de verre équilibré, c'est-à-dire à même pourcentage de fibres dans les sens chaîne et trame, par exemple un tissu de verre de type E à 55 % de fibres en masse, dont le module d'YOUNG et la résistance en traction statique sont respectivement de l'ordre de 20000 MPa et 300 MPa. Le matériau composite PEEK/carbone résultant de l'injection à chaud à partir des granulés décrits ci-dessus présente donc des caractéristiques remarquables pour un matériau injecté. A titre complémentaire, ces granulés contiennent 24 % en volume de fibres et 76 % en volume de résine PEEK, et leur masse volumique est de l'ordre de 1,41 à 1,44 kg/dm3. La matrice PEEK a elle-même une résistance à la traction de l'ordre de 90 à 100 MPa, un allongement à rupture de 70 %, un module d'YOUNG de l'ordre de 4000 MPa, une température de transition vitreuse de 143°C et une température de fusion de 390°C. Les fibres de renfort sont des fibres de carbone haute résistance de dénomination commerciale "XAS" de la société britannique COURTAULDS, d'une longueur de l'ordre de 0,1 à environ 0,5 mm. Le composite thermoplastique PEEK/carbone injectable ainsi obtenu possède de très bonnes caractéristiques mécaniques en statique, une bonne tenue thermique et aucune sensibilité au vieillissement humide accéléré.

Pour terminer la fabrication de la pale, les bagues métalliques ou céramiques 27 et 28 sont rapportées par collage ou frettage sur le manchon 21 de la pale démoulée, de sorte à obtenir une pale selon les figures 1 à 8.

De même, une coiffe de protection du bord d'attaque, en titane ou acier inoxydable par exemple, peut être rapportée par collage sur la pale après démoulage, ou solidarisée à la pale au cours du moulage, si les empreintes du moule d'injection 61 sont aménagées en conséquence et que la coiffe est mise en place dans ce moule, avant sa fermeture et en position appropriée par rapport aux autres éléments qu'il contient.

Dans la variante du procédé représentée sur les figures 36 à 39, les bagues 27 et 28 sont intégrées à la pale lors de l'étape de moulage par injection. Ceci est obtenu de la manière suivante : après avoir équipé la pièce élémentaire préfabriquée et rigide constituant le longeron 7 de son outillage de positionnement 62, formant noyau d'injection, comme représenté sur la figure 29, on met les pièces élémentaires préfabriquées et rigides constituant les revêtements d'intrados 6a et d'extrados 6b en place autour du longeron 7 et de son outillage de positionnement 62, en disposant les bagues 27 et 28 autour des extrémités axiales des demi-coquilles 21a et 21b destinées à former le manchon 21 du pied 4, comme représenté sur la figure 36. Dans cette configuration, comme dans celle de la figure 33, les extrémités axiales des demi-coquilles 21a et 21b qui sont du côté de l'outillage 62 sont appliquées contre l'épaulement radial annulaire de l'outillage 62, qui entoure le raccordement des embouts 64 aux embases 63 de cet outillage 62. Comme représenté sur la figure 37, l'ensemble de la figure 36 et ensuite disposé dans l'empreinte de la partie inférieure 61a du moule d'injection 61, qui est ensuite fermé comme représenté sur la figure 38. Bien entendu, dans cette variante du procédé, les empreintes internes des parties inférieure 61a et supérieure 61b du moule d'injection 61 sont aménagées pour recevoir les bagues 27 et 28.

Le moule 61 étant fermé, on procède à l'injection comme précédemment, la résine PEEK des demi-coquilles 21a et 21b notamment est mise en fusion par apport de chaleur à partir du même matériau composite fluidifié injecté que dans l'exemple précédent, de sorte que le refroidissement consécutif entraîne par rigidification de la résine PEEK en contact avec les bagues 27 et 28, la solidarisation de ces bagues au manchon 21 alors formé par solidarisation des demi-coquilles 21a et 21b.

Enfin, par l'ouverture du moule 61 et le retrait des parties d'outillage de positionnement 62a et 62b, la pale, identique à celle des figures 1 à 8, est démoulée, comme représenté en figure 39.

Le procédé de fabrication de la variante de pale représentée sur la figure 9 ne diffère de celui qui vient d'être décrit que par l'étape de réalisation de la pièce élémentaire préfabriquée destinée à constituer le longeron 37 ayant une partie d'emplanture 35 à attache de liaison en boucle 38. Un tel longeron 37 peut être réalisé selon le procédé décrit en référence à la figure 9 du brevet français 2 616 409 précité qui est appliqué à d'autres matériaux. Selon ce procédé, cette pièce élémentaire est réalisée par enroulement d'un ruban de fibres de carbone continues, unidirectionnelles et longitudinales agglomérées par de la résine PEEK, en plusieurs couches et sous tension mécanique autour de deux bobines, d'axes parallèles mais espacées l'une de l'autre d'une distance supérieure à l'envergure de la pale. La tension mécanique à l'enroulement peut être obtenue en soumettant l'une des deux bobines à une traction qui tend à l'écarter de l'autre au cours de l'enroulement du ruban. On obtient ainsi un écheveau enroulé en boucle allongée et fermée, qui est mis en forme par compactage sous pression et à une température de fusion de la matrice PEEK, de l'ordre de 400°C, dans un moule comportant un noyau pour maintenir écartées les deux parties de l'écheveau destinées à constituer les deux faisceaux d'attache 37a et 37b reliés l'un à l'autre par l'extrémité en boucle 38 du longeron 37. Après solidification de la matrice PEEK par refroidissement du moule de compactage et de son contenu, la partie d'extrémité de l'enroulement située du côté opposé à l'attache en boucle 38 est découpée, pour ramener la longueur du longeron 37 ainsi obtenu à la longueur souhaitée selon l'envergure de la pale.

Le longeron 37 ainsi réalisé sous forme de pièce élémentaire préfabriquée est ensuite mis en place avec les autres composants préfabriqués en composite PEEK/carbone de la pale dans un moule d'assemblage et d'injection sous pression, comme décrit ci-dessus pour la pale des figures 1 à 8 en référence aux figures 28 à 35 et 36 à 39, en adaptant bien entendu l'outillage de positionnement du longeron à la forme particulière de sa partie d'emplanture avec boucle d'attache.

Dans cet exemple également, les bagues du pied de pale, ainsi, éventuellement, que la coiffe de protection du bord d'attaque sont montés sur la pale par collage ou frettage, après le moulage de cette dernière, ou intégrées à la pale au cours de l'étape d'assemblage et moulage par injection.

## Revendications

1. Pale essentiellement en matériau composite, pour rotor de giravion, et comprenant :
- une coque rigide (6,36) composite, à profil aérodynamique, allongée longitudinalement selon l'envergure de la pale (1,31) et dont une extrémité longitudinale, destinée à être tournée vers un moyeu du rotor, présente un pied de pale (4,34), ladite coque (6,36) comportant au moins une couche de fibres de renfort agglomérées par une matrice en une résine synthétique de rigidification,
- au moins un longeron (7,37) dont au moins une partie est logée sensiblement longitudinalement dans la coque (6,36), et comportant au moins un faisceau composite allongé, de fibres de renfort continues et unidirectionnelles agglomérées par une matrice en une résine synthétique de rigidification, et
- au moins un corps de remplissage composite (9,10; 40) disposé dans la coque (6,36) entre cette dernière et au moins un longeron (7,37), et comportant également des fibres de renfort agglomérées par une matrice en une résine synthétique de rigidification,
caractérisée en ce que la résine des matrices de la coque (6,36), de chaque corps de remplissage (9,10;40) et de chaque faisceau de chaque longeron (7,37) est une résine thermoplastique, et en ce que chaque corps de remplissage (9,10;40) est constitué en un matériau composite à fibres courtes de renfort agglomérées par ladite résine thermoplastique, et qui assure la liaison de la coque (6,36) à chaque partie de chaque longeron (7,37) logée dans la coque (6,36).

2. Pale selon la revendication 1, caractérisée en ce que la résine thermoplastique est une résine de poly-ether-ether-cetone (PEEK) et les fibres de renfort sont choisies parmi les fibres de carbone et de verre.

3. Pale selon la revendication 2, caractérisée en ce que les fibres de renfort de la coque (6,36), de chaque corps de remplissage composite (9,10;40) et de chaque faisceau composite de chaque longeron (7,37) sont de même nature, et sont de préférence en carbone.

4. Pale selon l'une des revendications 1 à 3, dont la coque (6,36) comporte des revêtements d'extrados (6b) et d'intrados (6a) stratifiés s'étendant du bord d'attaque (8) au bord de fuite (11) de la pale (1,31), caractérisée en ce que chaque revêtement stratifié (6a,6b) comprend, de l'intérieur vers l'extérieur de la coque (6), un film de résine de polyetherimide (PEI), au moins une couche de nappes de fibres longues et unidirectionnelles, orientées sensiblement selon l'axe longitudinal de la pale (1), et au moins une couche de tissu de fibres, dont les directions des fils de trame et de chaîne sont orientées sensiblement à 45° par rapport à l'axe longitudinal (A) de la pale (1).

5. Pale selon la revendication 4, dont le pied de pale (4,34) est tubulaire et prolonge la coque (6, 36) sensiblement axialement, caractérisée en ce que le pied de pale (4,34) comprend deux demi-coquilles complémentaires (21a,21b;41a,41b), dont chacune est constituée par un prolongement de l'un respectivement des deux revêtements stratifiés (6a,6b).

6. Pale selon l'une quelconque des revendications 1 à 5, caractérisée en ce que chaque partie de chaque faisceau de longeron (7,37) qui est logée dans ladite coque (6,36) est entourée d'un film de résine de polyetherimide.

7. Pale selon l'une des revendications 1 à 6, pour rotor multi-pales, à pales démontables individuellement, utilisable comme rotor arrière, en particulier caréné, d'hélicoptère, et du type qui comporte une partie d'emplanture (5,35) de pale (1,31) comprenant au moins un faisceau d'attache (13a,13b;37a,37b) de pale qui est allongé, composite, et torsible autour de son axe longitudinal, et qui prolonge, à l'extérieur de la coque (6, 36) en traversant le pied de pale tubulaire (4,34), au moins un faisceau composite d'au moins un longeron (7,37) d'axe longitudinal sensiblement parallèle à celui (A) de la pale (1,31), l'extrémité de chaque faisceau d'attache (13a,13b; 37a,37b), du côté opposé à la coque (6,36), étant aménagée en attache de liaison à un moyeu de rotor, caractérisée en ce que chaque faisceau d'attache (13a,13b;37a,37b) de la partie d'emplanture (5,35) est d'une seule pièce avec le faisceau composite du longeron (7,37), et constitué des mêmes fibres de renfort agglomérées par la même résine thermoplastique.

8. Pale selon la revendication 7, caractérisée en ce que au moins un longeron (37) est constitué d'un écheveau de fibres de renfort continues et unidirectionnelles, agglomérées par ladite résine thermoplastique, et qui présente deux parties sensiblement parallèles l'une à l'autre et à l'axe longitudinal de la pale, qui constituent deux faisceaux de longeron (37) reçus dans la coque (36), et reliés l'un à l'autre par une partie en boucle sensiblement aplatie, qui constitue la partie d'emplanture (35), dont l'extrémité enroulée en boucle forme une attache en boucle (38) de liaison au moyeu, pour entourer une douille par laquelle la pale (31) est destinée à être individuellement rattachée, de manière amovible, au moyeu par un boulon, ladite attache en boucle étant reliée auxdits faisceaux de longeron (37) reçus dans la coque (36) par deux parties d'écheveau formant deux faisceaux d'attache torsibles (37a,37b) de la partie d'emplanture (35).

9. Pale selon la revendication 7, caractérisée en ce que l'attache de liaison au moyeu d'au moins un faisceau d'attache (13a,13b) est une attache feuilletée (15), comprenant au moins deux éléments feuilletés (15a,15b,15c) entre lesquels une portion d'extrémité de liaison (14a,14b) du faisceau d'attache (13a,13b), du côté opposé à la coque (6), est prise en sandwich et solidarisée, chaque élément feuilleté (15a,15b,15c) comprenant un empilement d'au moins deux couches des mêmes fibres de renfort que celles du faisceau d'attache (13a,13b), agglomérées par ladite résine thermoplastique, qui solidarise lesdits éléments feuilletés (15a,15b,15c) à ladite portion d'extrémité de liaison (14a, 14b), l'attache feuilletée (15) étant conformée pour venir en butée, vers la coque (6), contre des moyens amovibles de retenue de l'attache feuilletée (15) et de la pale (1) au moyeu.

10. Pale selon la revendication 9, caractérisée en ce que chaque faisceau d'attache (13a,13b) comprend au moins une lame pultrudée (57a,57b) de fibres continues et unidirectionnelles dans ladite résine thermoplastique, lesdites fibres étant orientées sensiblement selon l'axe longitudinal du faisceau d'attache (13a,13b), et chaque élément feuilleté (15a,15b,15c) de l'attache feuilletée (15) comprend un empilage de plusieurs couches de nappes croisées de fibres continues et unidirectionnelles et/ou couches de tissus de fibres, de sorte que les directions des fibres soient sensiblement à 45° par rapport à l'axe longitudinal du faisceau d'attache (13a,13b).

11. Pale selon l'une des revendications 7 à 10, telle que rattachée à la revendication 5, pour rotor multipales dont les pales sont de plus à pas variable, et du type dont le pied de pale (4) comporte un palier d'encastrement et de rotation du pied de pale sur un moyeu, ledit palier comprenant un manchon (21) de pied de pale qui comporte, en saillie radiale vers l'extérieur, un levier (25) de commande du pas, destiné à être articulé à un dispositif de commande collective du pas des pales (1) du rotor, caractérisée en ce que le manchon (21) est intégré auxdits revêtements et constitué par lesdites deux demi-coquilles complémentaires (21a,21b;41a,41b).

12. Pale selon la revendication 11, caractérisée en ce que le pied de pale (4) comporte également une manchette de renfort interne (22), en composite des mêmes fibres courtes de renfort noyées dans la même résine thermoplastique que les corps de remplissage.

13. Procédé de fabrication d'une pale selon l'une des revendications 1 à 12, dont la coque (6,36) composite est constituée d'un revêtement d'intrados (6a) et d'un revêtement d'extrados (6b) stratifiés, caractérisé en ce qu'il comprend les étapes suivantes, consistant :
- à réaliser chacun des revêtements stratifiés (6a, 6b) et longerons (7,37) en composite thermoplastique de la pale (1,31) sous la forme d'une pièce élémentaire préfabriquée,
- à disposer les pièces élémentaires préfabriquées dans un moule (61) d'injection et d'assemblage sous pression, comprenant une partie de moule inférieure (61a) et une partie de moule supérieure (61b) comportant des empreintes internes complémentaires, présentant respectivement la forme de la partie d'intrados et de la partie d'extrados de la pale (1,31), de sorte que lesdites pièces élémentaires préfabriquées occupent dans le moule (61) les positions respectives qu'elles occupent dans la pale (1,31),
- à fermer le moule (61) et à injecter dans ce dernier, entre lesdits revêtements (6a,6b), un matériau composite fluide de fibres courtes de renfort noyées dans une matrice thermoplastique chauffée à une température de fusion, afin de former le ou les corps de remplissage (9,10; 40) et, le cas échéant, la manchette de renfort interne (22) du pied de pale (4,34),
- à assurer une fusion, au moins locale, de la matrice desdites pièces élémentaires préfabriquées disposées dans le moule, dans leurs parties en contact avec le matériau composite fluide,
- à refroidir le moule (61), pour assurer la solidification de la matrice thermoplastique du matériau composite injecté et desdites pièces élémentaires, et la rigidification de l'ensemble ainsi assemblé des pièces élémentaires et du ou des corps injectés, et
- à démouler la pale (1, 31) ainsi obtenue.

14. Procédé selon la revendication 13, caractérisé en ce qu'il consiste de plus à chauffer ledit moule (61) à une température inférieure à la température de fusion de la matrice thermoplastique au cours de l'injection, et à assurer ladite fusion au moins locale de la matrice desdites pièces élémentaires par contact avec ledit matériau composite fluide injecté dans le moule (61).

15. Procédé selon l'une des revendications 13 et 14, caractérisé en ce qu'il comprend de plus l'étape consistant à disposer des bagues (27, 28) autour de parties, formant ledit pied de pale, desdits revêtements (6a, 6b) disposés l'un sur l'autre dans ledit moule (61) avant sa fermeture, afin de les assembler à la pale au cours du moulage.

16. Procédé selon l'une des revendications 13 à 15, caractérisé en ce qu'il comprend plus l'étape consistant à réaliser la pièce élémentaire constituant un revêtement stratifié d'intrados (6a) ou d'extrados (6b) de la coque (6) par mise en forme par estampage, entre deux parties (53a, 53b) de moule (53) maintenues à une température inférieure à la température de fusion de la matrice, et présentant des empreintes complémentaires (54a, 54b) correspondant à la forme du revêtement stratifié considéré (6a,6b), d'un panneau (52a) préchauffé à une température de fusion de la matrice, ayant la forme développée à plat du revêtement stratifié considéré (6a, 6b), et découpé dans une plaque précompactée (50), obtenue par empilage de plusieurs couches de tissus et/ou de nappes de fibres continues et unidirectionnelles de renfort agglomérées par la matrice ainsi que d'un film de polyetherimide, sous pression et à une température de fusion de la matrice, puis rigidification en plaque par solidification de la matrice par refroidissement.

17. Procédé selon l'une des revendications 13 à 16, pour fabriquer une pale (31), ayant au moins un longeron (37) en composite thermoplastique, dont une partie externe à la coque (36) constitue une partie d'emplanture (35) de pale à deux faisceaux d'attache (37a,37b) formant une attache en boucle (38) de liaison au moyeu et prolongeant au moins un faisceau de longeron (37) logé dans la coque (36), caractérisé en ce qu'il comprend de plus l'étape consistant à réaliser la pièce élémentaire constituant ledit longeron (37) par enroulement d'un ruban de fibres de renfort continues et unidirectionnelles agglomérées par ladite matrice thermoplastique, en plusieurs couches et sous tension mécanique autour de deux bobines, puis par mise en forme dans un moule par compactage de l'enroulement sous pression et à une température de fusion de la matrice, suivi d'un refroidissement de solidification de la matrice, et d'une découpe d'une partie d'extrémité de l'enroulement du côté opposé à l'attache en boucle (38).

18. Procédé selon l'une des revendications 13 à 16, pour fabriquer une pale (1) ayant au moins un longeron (7) en composite thermoplastique, dont une partie externe à la coque (6) constitue une partie d'emplanture (5) de pale à au moins un faisceau d'attache (13a,13b), dont une portion (14a,14b) d'extrémité de liaison au moyeu est munie d'une attache feuilletée (15), également en composite thermoplastique, et prolongeant un faisceau de longeron (7) logé dans la coque (6), caractérisé en ce qu'il comprend de plus l'étape consistant à réaliser la pièce élémentaire constituant le longeron (7) en réalisant chaque faisceau d'attache (13a,13b) et le faisceau de longeron (7) qu'il prolonge sous la forme d'une lame (57a,57b) de fibres de renfort continues et unidirectionnelles agglomérées par ladite matrice thermoplastique, obtenue par pultrusion à une température de fusion de la matrice, de plusieurs nappes de fibres continues et unidirectionnelles agglomérées par cette matrice, et, si ladite partie d'emplanture comprend au moins deux faisceaux d'attache (13a,13b), dont chacun prolonge respectivement un faisceau de longeron (7), à superposer des parties des lames (57a,57b) correspondantes destinées à former la partie de longeron (7) logée dans la coque (6), avec interposition d'au moins une nappe (58) des fibres continues et unidirectionnelles agglomérées par ladite matrice entre des parties superposées de lames (57a,57b) adjacentes, et à mettre en place un outillage amovible (59), en forme de coin, entre des parties à maintenir espacées l'une de l'autre de deux lames voisines (57a,57b), pour former deux faisceaux d'attache (13a,13b) de la partie d'emplanture (5), puis à disposer la ou les lames (57a,57b) dans un moule (60), et à intercaler chaque portion d'extrémité de liaison (14a,14b) d'une lame pultrudée (57a, 57b) entre deux éléments feuilletés (56) de l'attache (15), de façon à superposer tous les éléments feuilletés (56) de ladite attache (15), à fermer le moule (60) et à compacter son contenu sous pression et à une température de fusion de ladite matrice thermoplastique, à solidifier ensuite la matrice par refroidissement pour rigidifier le longeron (7) ainsi obtenu avec l'attache feuilletée solidarisée à sa partie d'emplanture (5).

19. Procédé selon la revendication 18, caractérisé en ce qu'il consiste de plus à réaliser chaque élément feuilleté (56) de l'attache feuilletée (15) en composite thermoplastique en empilant plusieurs couches de tissu et/ou de nappes de fibres continues et unidirectionnelles agglomérées par ladite matrice thermoplastique, en compactant l'empilage ainsi obtenu sous pression et à une température de fusion de la matrice, en solidifiant la matrice par refroidissement pour obtenir une plaque compactée (55), et en découpant ledit élément feuilleté (56) dans ladite plaque compactée (55).

## Claims

1. Blade, essentially made of composite material, for rotorcraft rotor, and comprising:
- a composite rigid shell (6, 36), with aerodynamic profile, elongated longitudinally along the span of the blade, (1, 31), one longitudinal end of which, intended to be turned towards a hub of the rotor, has a blade root (4, 34), the said shell (6, 36) including at least one layer of reinforcing fibres agglomerated by a matrix made of a synthetic rigidifying resin,
- at least one spar (7, 37), at least one part of which is housed substantially longitudinally in the shell (6, 36), including at least one elongate composite bar of continuous and unidirectional reinforcing fibres agglomerated by a matrix made of a synthetic rigidifying resin, and
- at least one composite filling body (9, 10; 40) arranged in the shell (6, 36) between the latter and at least one spar (7, 37), also including reinforcing fibres agglomerated by a matrix made of a synthetic rigidifying resin,
characterized in that the resin of the matrices of the shell (6, 36), of each filling body (9, 10; 40) and of each bar of each spar (7, 37) is a thermoplastic resin, and in that each filling body (9, 10; 40) consists of a composite material with short reinforcing fibres agglomerated by the said thermoplastic resin, which composite material joins the shell (6, 36) to each part of each spar (7, 37) housed in the shell (6, 36).

2. Blade according to Claim 1, characterized in that the thermoplastic resin is a polyetheretherketone (PEEK) resin, and the reinforcing fibres are chosen from carbon and glass fibres.

3. Blade according to Claim 2, characterized in that the reinforcing fibres of the shell (6, 36), of each composite filling body (9, 10; 40) and of each composite bar of each spar (7, 37) are of the same nature, and are preferably made of carbon.

4. Blade according to one of Claims 1 to 3, the shell (6, 36) of which includes laminated upper-surface (6b) and lower-surface (6a) skins extending from the leading edge (8) to the trailing edge (11) of the blade (1, 31), characterized in that each laminated skin (6a, 6b) comprises, from the inside towards the outside of the shell (6), a film of polyetherimide (PEI) resin, at least one layer of plies of long and unidirectional fibres which are oriented substantially along the longitudinal axis of the blade (1), and at least one layer of fibre fabric, in which the directions of the weft and warp yarns are oriented substantially at 45° with respect to the longitudinal axis (A) of the blade (1).

5. Blade according to Claim 4, in which the blade root (4, 34) is tubular and extends the shell (6, 36) substantially axially, characterized in that the blade root (4, 34) comprises two complementary half-casings (21a, 21b; 41a, 41b), each of which consists of an extension of one of the two laminated skins (6a, 6b) respectively.

6. Blade according to any one of Claims 1 to 5, characterized in that each part of each spar (7, 37) bar which is housed in the said shell (6, 36) is surrounded by a film of polyetherimide resin.

7. Blade according to one of Claims 1 to 6, for a multiblade rotor with individually dismountable blades, which can be used as a tail rotor, in particular a ducted tail rotor, for a helicopter, and of the type which includes a blade (1, 31) rooting part (5, 35) comprising at least one blade attachment bar (13a, 13b; 37a, 37b) which is elongate, composite, and twistable about its longitudinal axis, and which extends, outside the shell (6, 36) by passing through the tubular blade root (4, 34), at least one composite bar of at least one spar (7, 37) of longitudinal axis substantially parallel to that (A) of the blade (1, 31), the end of each attachment bar (13a, 13b; 37a, 37b), on the side opposite the shell (6, 36), being arranged in linkage attachment to a rotor hub, characterized in that each attachment bar (13a, 13b; 37a, 37b) of the rooting part (5, 35) is made integrally with the composite bar of the spar (7, 37) and consists of the same reinforcing fibres agglomerated by the same thermoplastic resin.

8. Blade according to Claim 7, characterized in that at least one spar (37) consists of a hank of continuous and unidirectional reinforcing fibres which are agglomerated by the said thermoplastic resin, which has two parts substantially parallel to each other and to the longitudinal axis of the blade, which constitute two spar bars (37) received in the shell (36) and joined to each other by a substantially flattened loop part which constitutes the rooting part (35), of which the end rolled into a loop forms a loop attachment (38) for linkage to the hub, to surround a bush by which the blade (31) is intended to be individually and removably attached to the hub by a bolt, the said loop attachment being connected to the said spar bars (37) received in the shell (36) by two hank parts forming two attachment torsion bars (37a, 37b) of the rooting part (35).

9. Blade according to Claim 7, characterized in that the attachment for linking at least one attachment bar (13a, 13b) to the hub is a laminate attachment (15), comprising at least two laminate elements (15a, 15b, 15c) between which an end linkage portion (14a, 14b) of the attachment bar (13a, 13b), on the side opposite the shell (6), is sandwiched and solidly attached, each laminate element (15a, 15b, 15c) comprising a stack of at least two layers of the same reinforcing fibres as those of the attachment bar (13a, 13b), which are agglomerated by the said thermoplastic resin which solidly attaches the said laminate elements (15a, 15b, 15c) to the said end linkage portion (14a, 14b), the laminate attachment (15) being shaped so as to abut, towards the shell (6), against the movable means for holding the laminate attachment (15) and the blade (1) to the hub.

10. Blade according to Claim 9, characterized in that each attachment bar (13a, 13b) comprises at least one pultruded strip (57a, 57b) of continuous and unidirectional fibres in the said thermoplastic resin, the said fibres being oriented substantially along the longitudinal axis of the attachment bar (13a, 13b), and each laminate element (15a, 15b, 15c) of the laminate attachment (15) comprises a stack of several layers of crossed plies of continuous and unidirectional fibres and/or layers of fibre fabric, such that the directions of the fibres are substantially at 45° with respect to the longitudinal axis of the attachment bar (13a, 13b).

11. Blade according to one of Claims 7 to 10, as related to Claim 5, for a multiblade rotor in which the blades furthermore have variable pitch, and of the type in which the blade root (4) includes a bearing for clamping and rotation of the blade root on a hub, the said bearing comprising a blade root cuff (21) which includes, projecting radially outwards, a pitch control lever (25) intended to be articulated to a device for collective control of the pitch of the blades (1) of the rotor, characterized in that the cuff (21) is integrated with the said skins and consists of the said two complementary half-casings (21a, 21b; 41a, 41b).

12. Blade according to Claim 11, characterized in that the blade root (4) also includes an internal reinforcing collar (22) made of a composite of the same short reinforcing fibres embedded in the same thermoplastic resin as the filling bodies.

13. Method for manufacturing a blade according to one of Claims 1 to 12, in which the composite shell (6, 36) consists of a lower-surface skin (6a) and of an upper-surface skin (6b) which are laminated, characterized in that it comprises the following steps, consisting:
- in producing each of the laminated skins (6a, 6b) and spars (7, 37) of thermoplastic composite of the blade (1, 31) in the form of a prefabricated elementary piece,
- in arranging the prefabricated elementary pieces in an injection and pressurized assembly mould (61), comprising a lower mould part (61a) and an upper mould part (61b) including complementary internal impressions, having respectively the shape of the lower-surface part and of the upper-surface part of the blade (1, 31), such that the said prefabricated elementary pieces occupy, in the mould (61), the respective positions which they occupy in the blade (1, 31),
- in closing the mould (61) and injecting therein, between the said skins (6a, 6b), a fluid composite material of short reinforcing fibres embedded in a thermoplastic matrix heated to a melting temperature, in order to form the filling body or bodies (9, 10; 40) and, optionally, the internal reinforcing collar (22) of the blade root (4, 34),
- in at least locally melting the matrix of the said prefabricated elementary pieces arranged in the mould, in their parts in contact with the fluid composite material,
- in cooling the mould (61) to solidify the thermoplastic matrix of the injected composite material and of the said elementary pieces, and rigidify the combination thus assembled of the elementary pieces and of the injected body or bodies, and
- in releasing the blade (1, 31) thus obtained from the mould.

14. Method according to Claim 13, characterized in that it furthermore consists in heating the said mould (61) to a temperature lower than the melting temperature of the thermoplastic matrix during the injection, and in at least locally melting the matrix of the said elementary pieces by contact with the said fluid composite material injected into the mould (61).

15. Method according to one of Claims 13 and 14, characterized in that it furthermore comprises the step consisting in arranging rings (27, 28) around parts, forming the said blade root, of the said skins (6a, 6b) arranged on each other in the said mould (61) before it is closed, in order to assemble them with the blade during the moulding.

16. Method according to one of Claims 13 to 15, characterized in that it furthermore comprises the step consisting in producing the elementary piece constituting a laminated lower-surface (6a) or upper-surface (6b) skin of the shell (6) by shaping by stamping, between two mould (53) parts (53a, 53b) held at a temperature lower than the melting temperature of the matrix, and having complementary impressions (54a, 54b) corresponding to the shape of the laminated skin (6a, 6b) in question, of a panel (52a) preheated to a melting temperature of the matrix, having the shape, developed flat, of the laminated skin (6a, 6b) in question, and cut out from a precompacted plate (50) obtained by stacking several layers of fabrics and/or plies of continuous and unidirectional reinforcing fibres agglomerated by the matrix as well as of a polyetherimide film, under pressure and at a melting temperature of the matrix, then rigidifying in a plate by solidifying the matrix by cooling.

17. Method according to one of Claims 13 to 16, for manufacturing a blade (31), having at least one spar (37) made of thermoplastic composite, in which a part external to the shell (36) constitutes a blade rooting part (35) with two attachment bars (37a, 37b) forming a loop attachment (38) for linking to the hub, extending at least one spar bar (37) housed in the shell (36), characterized in that it furthermore comprises the step consisting in producing the elementary piece constituting the said spar (37) by rolling a strip of continuous and unidirectional reinforcing fibres which are agglomerated by the said thermoplastic matrix in several layers and under mechanical tension around two spools, then by shaping in a mould by compacting the winding under pressure and at a melting temperature of the matrix, followed by solidification cooling of the matrix, and by cutting out an end part of the winding on the side opposite the loop attachment (38).

18. Method according to one of Claims 13 to 16, for manufacturing a blade (1) having at least one spar (7) made of thermoplastic composite, in which a part external to the shell (6) constitutes a blade rooting part (5) with at least one attachment bar (13a, 13b), in which an end portion (14a, 14b) for linkage to the hub is fitted with a laminate attachment (15), also made of thermoplastic composite, and extending a spar bar (7) housed in the shell (6), characterized in that it furthermore comprises the step consisting in producing the elementary piece constituting the spar (7) by producing each attachment bar (13a, 13b) and the spar bar (7) which it extends in the form of a strip (57a, 57b) of continuous and unidirectional reinforcing fibres which are agglomerated by the said thermoplastic matrix, obtained by pultrusion at a melting temperature of the matrix, of several plies of continuous and unidirectional fibres which are agglomerated by this matrix, and, if the said rooting part comprises at least two attachment bars (13a, 13b), each one of which respectively extends one spar bar (7), in superimposing the parts of the corresponding strips (57a, 57b) intended to form the spar part (7) housed in the shell (6), with interposition of at least one ply (58) of continuous and unidirectional fibres which are agglomerated by the said matrix between the adjacent superimposed strip (57a, 57b) parts, and in fitting a removable tool (59), in the shape of a wedge, between parts to be held spaced from each other of two neighbouring strips (57a, 57b), to form two attachment bars (13a, 13b) of the rooting part (5), then in arranging the strip or strips (57a, 57b) in a mould (60), and in inserting each linkage end portion (14a, 14b) of a pultruded strip (57a, 57b) between two laminate elements (56) of the attachment (15), so as to superimpose all the laminate elements (56) of the said attachment (15), in closing the mould (60) and in compacting its contents under pressure and at a melting temperature of the said thermoplastic matrix, in then solidifying the matrix by cooling to rigidify the spar (7) thus obtained with the laminate attachment solidly attached to its rooting part (5).

19. Method according to Claim 18, characterized in that it furthermore consists in producing each laminate element (56) of the laminate attachment (15) made of thermoplastic composite by stacking several layers of fabric and/or of plies of continuous and unidirectional fibres which are agglomerated by the said thermoplastic matrix, by compacting the stack thus obtained under pressure and at a melting temperature of the matrix, in solidifying the matrix by cooling to obtain a compacted plate (55), and in cutting out the said laminate element (56) from the said compacted plate (55).

## Patentansprüche

1. Im wesentlichen aus Verbundwerkstoff bestehendes Blatt für einen Drehflüglerrotor, das umfaßt:
- eine steife Verbundschale (6, 36) mit aerodynamischem Profil, die sich der Länge nach entsprechend der Spannweite des Blattes (1, 31) erstreckt und deren eines Längsende, das dazu bestimmt ist, der Rotornabe zugewandt zu sein, einen Blattfuß (4, 34) darstellt, wobei die Schale (6, 36) zumindest eine Lage mit Verstärkungsfasern aufweist, die durch eine Matrize aus einem synthetischen Versteifungsharz verpreßt sind,
- zumindest einen Längsträger (7, 37), von dem wenigstens ein Teil im wesentlichen in Längsrichtung in der Schale (6, 36) untergebracht ist und der wenigstens ein gestrecktes Verbundbündel aus durchgehenden und in einer Richtung verlaufenden Verstärkungsfasern aufweist, die durch eine Matrize aus einem synthetischen Versteifungsharz verpreßt sind, und
- zumindest einen Verbundfüllkörper (9, 10; 40), der in der Schale (6, 36) zwischen letzterer und wenigstens einem Längsträger (7, 37) angeordnet ist und auch Verstärkungsfasern umfaßt, die durch eine Matrize aus einem synthetischen Versteifungsharz verpreßt sind,
**dadurch gekennzeichnet,** daß das Matrizenharz der Schale (6, 36), jedes Füllkörpers (9, 10; 40) und jedes Bündels jedes Längsträgers (7, 37) ein thermoplastisches Harz ist, und daß jeder Füllkörper (9, 10; 40) aus einem Verbundwerkstoff mit kurzen Fasern gebildet wird, die durch das erwähnte thermoplastische Harz verpreßt sind, und die Verbindung der Schale (6, 36) mit jedem in der Schale (6, 36) untergebrachten Teil jedes Längsträgers (7, 37) gewährleistet.

2. Blatt nach Anspruch 1,
**dadurch gekennzeichnet,** daß das thermoplastische Harz ein Harz aus Polyätherätherketon (PEEK) ist und die Verstärkungsfasern aus Carbon- und Glasfasern gewählt sind.

3. Blatt nach Anspruch 2,
**dadurch gekennzeichnet,** daß die Verstärkungsfasern der Schale (6, 36), jedes Verbund-Füllkörpers (9, 10; 40) und jedes Verbundbündels jedes Längsträgers (7, 37) von gleicher Beschaffenheit sind, vorzugsweise aus Carbon.

4. Blatt nach einem der Ansprüche 1 bis 3, dessen Schale (6, 36) geschichtete Saugseitenverkleidungen (6b) und Druckseitenverkleidungen (6a) aufweist, die sich von der Vorderkante (8) zur Hinterkante (11) des Blatts (1, 31) erstrecken,
**dadurch gekennzeichnet,** daß jede geschichtete Verkleidung (6a, 6b), vom Inneren zum Äußeren der Schale (6), eine dünne Schicht aus Polyätherimidharz (PEI), zumindest eine Lage von langen und in einer Richtung verlaufenden Fasern,die im wesentlichen gemäß der Längsachse des Blattes (1) ausgerichtet sind, und zumindest eine Lage aus Fasergewebe umfaßt, wobei die Richtungen von Schuß- und Kettfäden im wesentlichen mit 45° in bezug zur Längsachse (A) des Blattes (1) ausgerichtet sind.

5. Blatt nach Anspruch 4, wobei der Blattfuß (4, 34) röhrenförmig ausgebildet ist und die Schale (6, 36) im wesentlichen axial verlängert,
**dadurch gekennzeichnet,** daß der Blattfuß (4, 34) zwei komplementäre Halbschalen (21a, 21b; 41a, 41b) umfaßt, die jeweils durch eine Verlängerung jeweils einer der beiden geschichteten Verkleidungen (6a, 6b) gebildet werden.

6. Blatt nach einem der Ansprüche 1 bis 5,
**dadurch gekennzeichnet,** daß jeder in der Schale (6, 36) untergebrachte Teil jedes Bündels des Längsträgers (7, 37) von einer dünnen Schicht aus Polyätherimid umgeben ist.

7. Blatt nach einem der Ansprüche 1 bis 6 für einen als insbesondere stromlinienförmiger Hubschrauber-Heckrotor verwendbaren Mehrblatt-Rotor mit einzeln demontierbaren Blättern von der Bauart, bei der ein Blatt (1, 31)-Wurzelteil (5, 35) vorgesehen ist, das wenigstens ein Blatt-Anschlußbündel (13a, 13b; 37a, 37b) umfaßt, das gestreckt, aus Verbund und um seine Längsachse verdrehbar ist und das außerhalb der Schale ((6, 36) unter Durchquerung des röhrenförmigen Blattfußes (4, 34) wenigstens ein Verbundbündel wenigstens eines Längsträgers (7, 37) mit einer Längsachse, die im wesentlichen parallel zu derjenigen (A) des Blattes (1, 31) verläuft, verlängert, wobei das Ende jedes Anschlußbündels (13a, 13b; 37a, 37b) an der zur Schale (6, 36) entgegengesetzten Seite als Verbindungsanschluß an einer Rotornabe gebildet ist,
**dadurch gekennzeichnet,** daß jedes Anschlußbündel (13a, 13b; 37a, 37b) des Wurzelteils (5, 35) aus einem einzigen Stück mit dem Verbundbündel des Längsträgers (7, 37) ist und aus den gleichen Verstärkungsfasern aufgebaut ist, die durch das gleiche thermoplastische Harz verpreßt sind.

8. Blatt nach Anspruch 7,
**dadurch gekennzeichnet,** daß wenigstens ein Längsträger (37) aus einem Strang mit durchgehenden und in einer Richtung verlaufenden Verstärkungsfasern, die durch das erwähnte thermoplastische Harz verpreßt sind, aufgebaut ist und zwei zueinander und zur Längsachse des Blattes im wesentlichen parallele Teile aufweist, die zwei Bündel des Längsträgers (37) bilden, die in der Schale (36) aufgenommen und miteinander durch einen im wesentlichen abgeflachten Schleifenteil verbunden sind, das den Wurzelteil (35) darstellt, wobei das in eine Schleifenform zusammengerollte Ende einen Schleifenanschluß (38) zur Verbindung mit der Nabe bildet, um eine Fassung zu umschließen, durch welche das Blatt (31) dazu bestimmt ist, einzeln auf lösbare Weise mittels eines Bolzens an die Nabe angesetzt zu werden, wobei der erwähnte Schleifenanschluß mit den in der Schale (36) aufgenommenen Bündeln des Länsträgers (37) durch zwei Strangteile verbunden ist, die zwei verdrehbare Anschlußbündel (37a, 37b) des Wurzelteils (35) bilden.

9. Blatt nach Anspruch 7,
**dadurch gekennzeichnet,** daß der Verbindungsanschluß zur Nabe mindestens eines Anschlußbündels (13a, 13b) ein blätteriger Anschluß (15) ist, der wenigsten zwei blätterige Elemente (15a, 15b, 15c) umfaßt, zwischen denen ein Verbindungsendbereich (14a, 14b) des Anschlußbündels (13a, 13b) an der zur Schale (6) entgegengesetzten Seite mehrlagig ausgeführt und zu einem Stück vereinigt ist, wobei jedes blätterige Element (15a, 15b, 15c) einen Stapel von wenigstens zwei Lagen von gleichen Verstärkungsfasern wie diejenigen des Anschlußbündels (13a, 13b) aufweist, die durch das erwähnte thermoplastische Harz verpreßt sind, das die blätterigen Elemente (15a, 15b, 15c) mit dem genannten Verbindungsendbereich (14a, 14b) zu einem Stück vereinigt, wobei der blätterige Anschluß (15) zur Erzielung eines Anschlags zur Schale (6) hin gegen lösbare Rückhalte-Mittel des blätterigen Anschlusses (15) und des Blattes (1) an der Nabe gestaltet ist.

10. Blatt nach Anspruch 9,
**dadurch gekennzeichnet,** daß jedes Anschlußbündel (13a, 13b) wenigstens einen zieh-stranggepreßten dünnen Streifen (57a, 57b) von durchgehenden und in einer Richtung verlaufenden Fasern im erwähnten thermoplastischen Harz umfaßt, wobei die Fasern im wesentlichen gemäß der Längsachse des Anschlußbündels (13a, 13b) ausgerichtet sind, und daß jedes blätterige Element (15a, 15b, 15c) des blätterigen Anschlusses (15) einen Stapel von mehreren Lagen gekreuzter Vliese aus durchgehenden und in einer Richtung verlaufenden Fasern und/oder Lagen aus Fasergeweben umfaßt, derart, daß die Faserrichtungen im wesentlichen unter 45° in bezug zur Längsachse des Anschlußbündels (13a, 13b) verlaufen.

11. Blatt nach einem der Ansprüche 7 bis 10, das so wie nach Anspruch 5 zusammengesetzt ist, für einen Mehrblatt-Rotor, dessen Blätter außerdem von variabler Steigung sind, von der Bauart, bei der der Blattfuß (4) ein Lager zum Einbauen und zur Drehung des Blattfußes an einer Nabe aufweist, wobei das Lager einen Stutzen (21) des Blattfußes umfaßt, der bei radialem Aufbau nach außen hin einen Einstellhebel (25) für die Steigung enthält, der dazu bestimmt ist, an eine gemeinsame Einstelleinrichtung der Steigung der Blätter (1) des Rotors gelenkig angebracht zu werden,
**dadurch gekennzeichnet,** daß der Stutzen (21) mit den Verkleidungen integriert und aus den erwähnten beiden komplementären Halbschalen (21a, 21b; 41a, 41b) aufgebaut ist.

12. Blatt nach Anspruch 11,
**dadurch gekennzeichnet,** daß der Blattfuß (4) auch eine innere Verbund-Verstärkungsmanschette (22) aus gleichen kurzen Verstärkungsfasern enthält, die in das gleiche thermoplastische Harz eingelassen sind wie die Füllkörper.

13. Verfahren zur Herstellung eines Blattes gemäß einem der Ansprüche 1 bis 12, wobei die Verbundschale (6, 36) aus einer geschichteten Druckseitenverkleidung (6a) und aus einer geschichteten Saugseitenverkleidung (6b) aufgebaut ist,
**gekennzeichnet durch** folgende Schritte, die darin bestehen, daß
- jede der geschichteten Verkleidungen (6a, 6b) und jeder der Längsträger (7, 37) aus thermoplastischem Verbundwerkstoff des Blatts (1, 31) in der Form eines vorgefertigten Elementarstücks realisiert wird,
- die vorgefertigten Elementarstücke in einer Spritz - und Druckverbindungsform (61) angeordnet werden, die ein unteres Formteil (61a) und ein oberes Formteil (61b) umfaßt, die jeweils innere, komplementäre Vertiefungen enthalten und jeweils die Form des Saugseitenteils und des Druckseitenteils des Blatts (1, 31) bilden, derart, daß die vorgefertigten Elementarstücke in der Form (61) jeweils diejenigen Stellen belegen, die sie im Blatt (1, 31) belegen,
- die Form (61) geschlossen wird und in letztere zwischen die Verkleidungen (6a, 6b) ein flüssiger Verbundwerkstoff aus kurzen Verstärkungsfasern eingespritzt wird, die in einer thermoplastischen, auf eine Schmelztemperatur aufgeheizten Matrize eingetaucht sind, um den oder die Füllkörper (9, 10; 40) und gegebenenfalls die innere Verstärkungsmanschette (22) des Blattfußes (4, 34) zu formen,
- eine zumindest örtliche Verschmelzung der Matrize der in der Form angeordneten vorgefertigten Elementarstücke an ihren mit dem flüssigen Verbundwerkstoff in Berührung stehenden Teilen gewährleistet wird,
- die Form (61) wieder abgekühlt wird, um die Verfestigung der thermoplastischen Matrize aus eingespritztem Verbundwerkstoff und der Elementarstücke sowie die Versteifung der so zusammengesetzten Gruppe aus Elementarstücken und des/der eingespritzten Körper zu gewährleisten, und
- das so erhaltene Blatt (1, 31) aus der Form herausgehoben wird.

14. Verfahren nach Anspruch 13,
**dadurch gekennzeichnet,** daß es außerdem darin besteht, daß die Form (61) auf eine geringere Temperatur als die Schmelztemperatur der thermoplastischen Matrize im Verlauf der Einspritzung aufgeheizt wird, und daß die zumindest örtliche Verschmelzung der Matrize der Elementarstücke durch Berührung mit dem in die Form (61) eingespritzten flüssigen Verbundwerkstoff gewährleistet wird.

15. Verfahren nach einem der Ansprüche 13 und 14,
**dadurch gekennzeichnet,** daß es außerdem einen Schritt umfaßt, der darin besteht, daß Ringe (27, 28) um Teile, die den Blattfuß bilden, der in der Form (61) vor deren Schließung eine über der anderen angeordneten Verkleidungen (6a, 6b) angebracht werden, um sie mit dem Blatt im Verlauf des Gießens zu verbinden.

16. Verfahren nach einem der Ansprüche 13 bis 15,
**dadurch gekennzeichnet,** daß es außerdem einen Schritt umfaßt, der darin besteht, daß das eine geschichtete Druckseitenverkleidung (6a) oder Saugseitenverkleidung (6b) der Schale (6) bildende Elementarstück durch Informbringen mittels Pressung einer auf die Schmelztemperatur der Matrize aufgeheizten Platte (52a) zwischen zwei Teilen (53a, 53b) der Form (53) realisiert wird, die beide auf einer geringeren Temperatur als die Schmelztemperatur der Matrize gehalten werden und komplementäre Abformungen (54a, 54b) entsprechend der Form der betrachteten geschichteten Verkleidung (6a, 6b) aufweisen, wobei die Platte (52a) die in die Ebene entwickelte Form der betrachteten geschichteten Verkleidung (6a, 6b) hat und aus einer vorverdichteten Scheibe (50) ausgeschnitten ist, die durch Stapelung mehrerer Lagen aus Gewebe und/oder Vlies aus durchgehenden und in einer Richtung verlaufenden Verstärkungsfasern erhalten wird, die so wie eine dünnen Schicht aus Polyätherimid durch die Matrize unter Druck und bei Schmelztemperatur der Matrize verpreßt werden, und daß dann eine plattenweise Versteifung durch Verfestigung der Matrize durch Ankühlung realisiert wird.

17. Verfahren nach einem der Ansprüche 13 bis 16 zur Herstellung eines Blatts (31), das wenigstens einen Längsträger (37) aus thermoplastischem Verbundmaterial aufweist, von dem ein außerhalb der Schale (36) liegender Teil einen Blattwurzelteil (35) mit zwei Anschlußbündeln (37a, 37b) darstellt, die einen Schleifenanschluß (38) zur Verbindung mit der Nabe bilden und wenigstens ein in der Schale (36) untergebrachtes Bündel des Längsträgers (37) verlängern,
**dadurch gekennzeichnet,** daß es außerdem einen Schritt umfaßt, der darin besteht, daß das den Längsträger (37) bildende Elementarstück durch Wickeln eines Bandes aus durchgehenden und in einer Richtung verlaufenden Verstärkungsfasern, die durch die thermoplastische Matrize verpreßt werden, in mehreren Lagen und unter mechanischer Spannung um zwei Spulen, dann durch Informbringung in einer Form durch Verdichtung der Wicklung unter Druck und bei einer Schmelztemperatur der Matrize realisiert wird, gefolgt von einer Verfestigungsabkühlung der Matrize und einem Abschneiden eines Wicklungs-Endstücks an der zum Schleifenanschluß (38) entgegengesetzten Seite.

18. Verfahren nach einem der Ansprüche 13 bis 16 zur Erzeugung eines Blatts (1), das wenigstens einen Längsträger (7) aus thermoplastischem Verbundmaterial aufweist, von dem ein außerhalb der Schale (6) liegender Teil einen Blattwurzelteil (5) mit wenigstens einem Anschlußbündel (13a, 13b) darstellt, bei dem ein Endbereich (14a, 14b) zur Verbindung mit der Nabe mit einem blätterigen Anschluß (15) auch aus thermoplastischem Verbundwerkstoff versehen ist und das ein in der Schale (6) untergebrachtes Bündel des Längsträgers (7) verlängert,
**dadurch gekennzeichnet,** daß es außerdem einen Schritt umfaßt, der darin besteht, daß das den Längsträger (7) bildende Elementarstück realisiert wird, indem jedes Anschlußbündel (13a, 13b) und das dieses verlängernde Bündel des Längsträgers (7) in Gestalt eines dünnen Streifens (57a, 57b) aus durchgehenden und in einer Richtung verlaufenden, durch die thermoplastische Matrize verpreßten Verstärkungsfasern ausgeführt ist, der bei einer Schmelztemperatur der Matrize durch Zieh-Strangpressung mehrerer Vliese aus durchgehenden und in einer Richtung verlaufenden Fasern, die durch diese Matrize verpreßt werden, erhalten wird, und daß, wenn das Wurzelstück zumindest zwei Anschlußbündel (13a, 13b) umfaßt, von denen jedes jeweils ein Bündel des Längsträgers (7) verlängert, entsprechende Teile der dünnen Streifen (57a, 57b) übereinander geschichtet werden, die dazu bestimmt sind, den in der Schale (6) untergebrachten Teil des Längsträgers (7) zu bilden, und zwar unter Zwischeneinfügung zumindest eines Vlieses (58) aus durchgehenden und in einer Richtung verlaufenden Fasern, die durch die Matrize verpreßt sind, zwischen übereinander angeordneten Teilen von benachbarten dünnen Streifen (57a, 57b), und daß ein lösbares Werkzeug (59) in Form eines Keils zwischen zueinander mit Abstand zu haltenden Teilen zweier benachbarter dünner Streifen (57a, 57b) zur Formung zweier Anschlußbündel (13a, 13b) des Wurzelteils (5) angebracht wird, daß dann der oder die dünnen Streifen (57a, 57b) in einer Form (60) angeordnet werden, und daß jeder Verbindungsendbereich (14a, 14b) eines zieh-stranggepreßten dünnen Streifens (57a, 57b) zwischen zwei blätterigen Elementen (56) des Anschlusses (15) eingeschachtelt wird, so daß alle blätterigen Elemente (56) des Anschlusses (15) übereinander geschichtet sind, daß die Form (60) geschlossen wird und daß ihr Inhalt unter Druck und bei einer Schmelztemperatur der thermoplastischen Matrize verdichtet wird, daß danach die Matrize durch Abkühlung verfestigt wird, um den so erhaltenen Längsträger (7) mit dem blätterigen, aus einem Stück bestehenden Anschluß am Wurzelteil (5) zu versteifen.

19. Verfahren nach Anspruch 18,
**dadurch gekennzeichnet,** daß es außerdem darin besteht, daß jedes blätterige Element (56) des blätterigen Anschlusses (15) aus thermoplastischem Verbundwerkstoff realisiert wird, indem mehrere Gewebelagen und/oder Vlieslagen aus durchgehenden und in einer Richtung verlaufenden Fasern gestapelt werden, indem die so erhaltene Stapelung unter Druck und bei einer Schmelztemperatur der Matrize verdichtet wird, indem die Matrize durch Abkühlung zur Erzielung einer verdichteten Platte (55) verfestigt wird, und indem das erwähnte, blätterige Element (56) aus der verdichteten Platte (55) ausgeschnitten wird.
